# EUROPÄISCHE PATENTSCHRIFT

(11) **EP 4 139 587 B1**
(45) Veröffentlichungstag und Bekanntmachung des Hinweises auf die Patenterteilung: **20.08.2025**
(21) Anmeldenummer: 21720724.0
(22) Anmeldetag: 20.04.2021
(51) Int. Cl.: F16H 25/20

(54) **LINEAR-VERSTELLER, POSITIONIER-VORRICHTUNG, POSITIONIER-ANORDNUNG UND VERFAHREN ZUR INSTANDSETZUNG EINES LINEAR-VERSTELLERS**
LINEAR ADJUSTER, POSITIONING DEVICE, POSITIONING ASSEMBLY AND METHOD FOR REPAIRING A LINEAR ADJUSTER
DISPOSITIF DE RÉGLAGE LINÉAIRE, DISPOSITIF DE POSITIONNEMENT, ENSEMBLE DE POSITIONNEMENT ET PROCÉDÉ DE RÉPARATION DE DISPOSITIF DE RÉGLAGE LINÉAIRE

(30) Priorität: 20.04.2020 DE 102020110697
(43) Veröffentlichungstag der Anmeldung: 01.03.2023
(73) Patentinhaber: Physik Instrumente (PI) SE & Co. KG, 76228 Karlsruhe (DE)
(72) Erfinder: HAMMER, Simon, 67630 Niederlauterbach (FR)
(74) Vertreter: Keller Schneider Patentanwaltsgesellschaft mbH
(86) Internationale Anmeldenummer: PCT/EP2021/060222
(87) Internationale Veröffentlichungsnummer: WO 2021/214046

(56) Entgegenhaltungen:
- EP-A2- 2 202 870
- EP-B1- 2 202 870
- DE-A1- 102008 012 001
- DE-B4- 102008 012 001
- FR-A1- 2 866 020
- US-A- 5 088 339
- US-A1- 2002 074 866

## Beschreibung

Die Erfindung betrifft einen Linear-Versteller, eine Positionier-Vorrichtung, eine Positionier-Anordnung, eine Verwendung von zumindest zwei Linear-Verstellern sowie ein Verfahren zur Instandsetzung eines Linear-Verstellers.

Aus der DE 10 2004 007 550 A1 und aus der EP 2 202 870 A2 ist jeweils ein Antrieb für einen Spindelantrieb mit einer Anschlagvorrichtung bekannt.

Die EP 1 1898 122 A2 beschreibt eine Stellvorrichtung für einen Linear-Versteller.

Die US 2 497 424 offenbart eine Anschlagvorrichtung für einen Linearversteller.

Die DE 100 01 939 A1 beschreibt eine Verstellvorrichtung zur Positionierung einer Linse in einem Projektor. Die Verstellvorrichtung weist einen Linsen-Abstützrahmen und einen Linsen-Aufnahmerahmen zur Aufnahme einer Linse auf. Der Linsen-Aufnahmerahmen ist gegenüber dem Linsen-Abstützrahmen innerhalb bestimmter Grenzen in zueinander entgegen gesetzten linearen Stellrichtungen verstellbar. Dabei ist eine Antiblockier-Mutter einerseits über Feingewinde auf einer Antriebsspindel und andererseits über Grobgewinde in einer Rahmenbohrung einer Ausformung des Linsen-Aufnahmerahmens drehbar geführt. In das Gewinde der Ausformung ragen zwei Anschläge einer Klammer, an die die Antiblockier-Mutter durch eine Bewegung, die durch die Grobgewinde definiert ist, zum Anschlag gebracht werden kann. In diesem Zustand bewegt die Antiblockier-Mutter, angetrieben über die Feingewinde, die Klammer und dadurch den Linsen-Aufnahmerahmen in eine jeweilige Stellrichtung, bis der Linsen-Aufnahmerahmen in einen Anschlagzustand mit einem der Endanschläge des Linsen-Abstützrahmens kommt. Durch die Grobgewinde wird bei den Stellbewegungen ein Blockieren der Antiblockier-Mutter verhindert.

Die FR 2 866 020 A1 beschreibt ein Hintereinanderschalten von Verstellern zur geradlinigen Bewegung von Lasten.

Eine Aufgabe der Erfindung ist, einen Linear-Versteller bereitzustellen, der hinsichtlich eines zuverlässigen Betriebs vorteilhaft ist, und eine Positionier-Vorrichtung mit einem solchen Linear-Versteller, eine Positionier-Anordnung mit zumindest zwei und insbesondere sechs solchen Linear-Verstellern, eine Verwendung von zumindest zwei solchen Linear-Verstellern sowie ein Verfahren zur Instandsetzung eines solchen Linear-Verstellers bereitzustellen.

Die Lösung dieser Aufgabe wurde durch einen Linear-Versteller gelöst, der die Merkmale des Anspruchs 1 aufweist. Vorteilhafte Weiterbildungen sind in den abhängigen Ansprüchen definiert.

Das erste Stellteil und das zweite Stellteil sind derart realisiert, dass die erste Anschlagvorrichtung und die zweite Anschlagvorrichtung in einen Anschlagzustand kommt, bei der sich die erste Anschlagvorrichtung und die zweite Anschlagvorrichtung mit einander zugewandten Oberflächen aneinander in Anlage befinden, wenn sich die die erste Anschlagvorrichtung und die zweite Anschlagvorrichtung in einem Anschlag-Bereitstellungszustand befinden und der Linear-Versteller eine Einfahrbewegung mit Reduzierung einer Verstellerlänge ausführt und sich das erste Stellteil und das zweite Stellteil in einer vorbestimmten jeweiligen Anschlag-Fahrposition relativ zueinander befinden. Der Anschlagzustand ist bei den Ausführungsformen des erfindungsgemäßen Linear-Verstellers insbesondere dadurch definiert, dass sich in diesem die erste Anschlagvorrichtung und die zweite Anschlagvorrichtung mit einander zugewandten Oberflächen aneinander in Anlage befinden.

Zu diesem Zweck weist der Linear-Versteller die Feststellvorrichtung auf, die einen Anschlag-Bereitstellungszustand und einen Anschlag-Freigabezustand einnehmen kann, wobei durch Lösen der mechanischen Fixierung der Feststellvorrichtung der Anschlag-Freigabezustand eingestellt wird. Bei dem Anschlag-Bereitstellungszustand ist die erste Anschlagvorrichtung an dem ersten Basiskörper oder die zweite Anschlagvorrichtung an dem zweiten Basiskörper mechanisch fixiert. Bei einer entsprechenden Ausführungsform des Linear-Verstellers tritt der Anschlagzustand bei der Einfahrbewegung ein. Nach einer Ausführungsform des erfindungsgemäßen Linear-Verstellers befindet sich derselbe nach Lösen der mechanischen Fixierung der Feststellvorrichtung in dem Anschlag-Freigabezustand, in dem die Stellteile von der Anschlag-Fahrposition aus mit dem Spindel-Spindelmutter-Mechanismus relativ zueinander in der Einfahrbewegung oder einer Ausfahrbewegung oder, alternativ dazu, relativ zueinander in der Einfahrbewegung und der Ausfahrbewegung bewegbar sind.

Bei den erfindungsgemäßen Ausführungsformen des Linear-Verstellers kann dieser derart realisiert sein, dass in dem Fall, dass der Anschlagzustand bei einer Einfahrbewegung mit Reduzierung der Verstellerlänge zustande kommt, in dem Anschlag-Bereitstellungszustand von der in diesem bestehenden Anschlag-Fahrposition aus eine weitere Einfahrbewegung mechanisch verhindert wird und eine weitere Einfahrbewegung nicht mehr möglich und mechanisch, insbesondere durch ein Anschlagteil, blockiert ist. Zusätzlich kann bei den erfindungsgemäßen Ausführungsformen des Linear-Verstellers dieser derart realisiert sein, dass in dem Fall, dass der Anschlagzustand bei einer Ausfahrbewegung mit einer Vergrößerung der Verstellerlänge zustande kommt, in dem Anschlag-Bereitstellungszustand von der dann bestehenden Anschlag-Fahrposition aus eine weitere Ausfahrbewegung mechanisch verhindert wird und eine weitere Einfahrbewegung nicht mehr möglich und mechanisch, insbesondere durch ein Anschlagteil, blockiert ist.

Bei den erfindungsgemäßen Ausführungsformen des Linear-Verstellers kann dieser derart realisiert sein, dass das Lösen der mechanischen Fixierung der Feststellvorrichtung durch die nachfolgend genannten Alternativen (F1), (F2), (F3) definiert ist, wobei für die Beschreibung der Erfindung als erste Feststell-Komponente der erste Basiskörper oder der zweite Basiskörper definiert ist und als zweite Feststell-Komponente eine der ersten Feststell-Komponente zugeordnete Feststell-Komponente definiert ist, die - wenn die erste Feststell-Komponente der erste Basiskörper ist - die erste Anschlagvorrichtung ist oder die - wenn die erste Feststell-Komponente der zweite Basiskörper ist - die zweite Anschlagvorrichtung ist, sofern in einer Ausführungsform die jeweilige erste Feststell-Komponente und die jeweilige zweite Feststell-Komponente einen Anschlag-Bereitstellungszustand ausbilden:
(F1) mechanische Entkopplung der ersten Feststell-Komponente und der zweiten Feststell-Komponente, wobei noch eine mechanische Verbindung, insbesondere Verbindung zwischen der ersten und der zweiten Feststell-Komponente bestehen bleibt, wobei diese Verbindung durch ein Drehgelenk oder eine Linearführung realisiert sein kann;
(F2) Herstellen einer freien Bewegbarkeit der zweiten Feststell-Komponente relativ zu der ersten Feststell-Komponente, bei der kein mechanischer Kontakt zwischen der zweiten Feststell-Komponente relativ zu der ersten Feststell-Komponente besteht und die zweite Feststell-Komponente relativ zu der ersten Feststell-Komponente frei bewegbar ist;
(F3) Verformung der zweiten Feststell-Komponente relativ zu der ersten Feststell-Komponente, z.B. plastisches oder elastisches Verformen der zweiten Feststell-Komponente, wenn die zweite Feststell-Komponente aus einem plastisch verformbaren Material bzw. elastisch verformbaren Material gebildet ist.

Bei Realisierung der Alternative (F1) mit dem Drehgelenk wird ein axial seitlich schwenkbarer Abschnitt der zweiten Feststell-Komponente für eine Bewegung in Bezug auf die Spindelachse radial nach außen in den Anschlag-Freigabezustand mechanisch freigegeben und radial nach außen bewegt. Bei Realisierung der Alternative (F2) kann die zweite Feststell-Komponente in Bezug auf die Spindelachse radial nach außen entfernt werden. Dabei kann in einer Realisierung das Lösen der zweiten Feststell-Komponente bereits durch Lösen der Fixierung gegeben sein. Auch kann in einer Realisierung das Lösen der zweiten Feststell-Komponente erst nach zusätzlichem Entfernen zumindest eines Abschnitts des derselben gegeben sein. Bei Realisierung der Alternative (F3) wird ein Verformungsabschnitt der zweiten Feststell-Komponente in Bezug auf die Spindelachse radial nach außen bewegt.

Bei den erfindungsgemäßen Ausführungsformen des Linear-Verstellers kann der Linear-Versteller insbesondere derart realisiert sein, dass in dem Anschlag-Bereitstellungszustand, bei dem die zweite Feststell-Komponente an der ersten Feststell-Komponente und relativ zu dieser in mechanisch befestigter oder verriegelter Weise positions- und lagefixiert angeordnet ist, das Ereignis (A) eintritt, dass der Linear-Versteller bei einer Einfahrbewegung mit Reduzierung der Verstellerlänge in einem Minimalverstellerlängen-Anschlagzustand zwischen dem ersten und zweiten Stellteil in einen ersten Anschlagzustand kommt.

Nach der Erfindung ist die erste Anschlagvorrichtung an dem ersten Basiskörper oder die zweite Anschlagvorrichtung an dem zweiten Basiskörper insbesondere in dem Anschlag-Bereitstellungszustand positions- und lagefixiert angeordnet und insbesondere befestigt und insbesondere dabei mittels einer jeweiligen Feststellvorrichtung befestigt. Erfindungsgemäß ist der Linear-Versteller derart realisiert, dass mit diesem die Maßnahme ausführbar ist
(B1) durch Bewegen der ersten Anschlagvorrichtung gegenüber dem ersten Basiskörper in einen Anschlag-Freigabezustand wird der Anschlagzustand zwischen dem ersten Stellteil und dem zweiten Stellteil aufgehoben, so dass dieser nicht mehr vorliegt, wobei vorgesehen sein kann, dass das erste Stellteil relativ zum zweiten Stellteil eine weitere Einfahrbewegung ausführen kann, falls das Ereignis (A) vorliegt;
(B2) durch Bewegen der zweiten Anschlagvorrichtung gegenüber dem zweiten Basiskörper in einen Anschlag-Freigabezustand wird der Anschlagzustand zwischen dem ersten Stellteil und dem zweiten Stellteil aufgehoben, so dass dieser nicht mehr vorliegt, wobei vorgesehen sein kann, dass das erste Stellteil relativ zum zweiten Stellteil eine weitere Einfahrbewegung ausführen kann, falls das Ereignis (A) vorliegt.

Nach einer Ausführungsform der Erfindung ist die zweite Feststell-Komponente zumindest abschnittsweise oder vollständig außerhalb der ersten Feststell-Komponente angeordnet, so dass die zweite Feststell-Komponente von außen zugänglich ist und auch manuell und insbesondere mit einem Werkzeug von außen betätigt werden kann, d.h. dass diese durch manuelle Tätigkeit von dem Bereitstellungszustand in den Anschlag-Freigabezustand gebracht oder bewegt werden kann.

Jede Ausführungsform der Erfindung kann derart ausgebildet sein, dass der Übergang von dem Anschlag-Bereitstellungszustand zwischen der zweiten Feststell-Komponente und der ersten Feststell-Komponente zu dem Anschlag-Freigabezustand durch Bewegen der zweiten Feststell-Komponente oder zumindest eines Abschnitts desselben in Bezug auf die Spindelachse erfolgt, wobei der Linear-Versteller nach einer oder mehreren der folgenden Alternativen (C1), (C2) ausgeführt sein kann:
(C1) Im Anschlag-Bereitstellungszustand ist die jeweilige zweite Feststell-Komponente mit einer Befestigungsvorrichtung insbesondere mittels zumindest eines mechanisch verstellbaren Verbindungselements an der ersten Feststell-Komponente befestigt, wobei eine Anschlagvorrichtung-Aufnahme der jeweiligen zweiten Feststell-Komponente mit einer an einer Basiskörper-Aufnahme der jeweiligen ersten Feststell-Komponente verbunden und mit einem Verbindungselement in einer festgezogenen oder verriegelten Stellung in einem die erste und die zweite Feststell-Komponente verspannenden Zustand gehalten wird, und wobei durch Verändern der Stellung des Verbindungselements in einen Bewegbarkeits-Zustand, in dem dieses die Anschlagvorrichtung-Aufnahme und die Basiskörper-Aufnahme derart weniger oder nicht mehr verspannt, dass die zweite Feststell-Komponente insbesondere mit relativ geringem Kraftaufwand in den Anschlag-Freigabezustand bewegt werden kann, wobei diese Bewegung in den Anschlag-Freigabezustand durch Verschwenken oder Verschieben der zweiten Feststell-Komponente relativ zur ersten Feststell-Komponente oder durch Lösen der mechanischen Verbindung zwischen der zweiten Feststell-Komponente von der ersten Feststell-Komponente und optional erst durch zusätzliches Entfernen der zweiten Feststell-Komponente von der ersten Feststell-Komponente erfolgt.
(C2) Im Anschlag-Bereitstellungszustand ist die jeweilige zweite Feststell-Komponente mit einer Klemmvorrichtung an der ersten Feststell-Komponente, beispielsweise durch eine formschlüssige Verbindung, angeklemmt, wobei eine Anschlagvorrichtung-Aufnahme der jeweiligen zweiten Feststell-Komponente mit einer an einer Basiskörper-Aufnahme der jeweiligen ersten Feststell-Komponente verbunden ist, und wobei durch Überwinden der Klemmung zwischen der zweiten Feststell-Komponente und der ersten Feststell-Komponente eine Bewegung der zweiten Feststell-Komponente in den Anschlag-Freigabezustand insbesondere durch Verschwenken oder Verschieben der zweiten Feststell-Komponente relativ zur ersten Feststell-Komponente oder durch Aufheben der mechanischen Verbindung zwischen der zweiten Feststell-Komponente und der ersten Feststell-Komponente und optional erst durch zusätzliches Entfernen der zweiten Feststell-Komponente von der ersten Feststell-Komponente erfolgt.

Hierin kann ein Lösen der mechanischen Verbindung zwischen der zweiten Feststell-Komponente von der ersten Feststell-Komponente insbesondere bedeuten, dass die zweite Feststell-Komponente mit geringem Kraftaufwand und insbesondere manuellem Kraftaufwand von der ersten Feststell-Komponente trennbar und aus dem Bewegungsbereich der ersten Feststell-Komponente entfernbar ist.

Bei den Ausführungsformen des erfindungsgemäßen Linear-Verstellers kann dieser derart realisiert sein, dass bei dem Anschlag-Bereitstellungszustand die zweite Feststell-Komponente an der ersten Feststell-Komponente mittels der Feststellvorrichtung in mechanisch fixierter oder befestigter Weise positions- und lagefixiert angeordnet ist, wobei zur Erreichung des Anschlag-Freigabezustands die Feststellvorrichtung gelöst wird und die zweite Feststell-Komponente für eine Bewegung von der ersten Feststell-Komponente weg in Bezug auf die Spindelachse radial nach außen in den Anschlag-Freigabezustand mechanisch freigegeben ist.

Bei den Ausführungsformen des erfindungsgemäßen Linear-Verstellers kann dieser derart realisiert sein, dass die zweite Feststell-Komponente und beispielsweise die erste Anschlagvorrichtung ein erstes Distanzstück und zumindest ein Mobilanschlagteil aufweist, wobei das erste Distanzstück von der ersten Feststell-Komponente und beispielsweise vom ersten Basiskörper aus in Richtung der Spindel-Längsachse zum zweiten Ende hin weg ragt und das erste Distanzstück einen proximalen Endabschnitt, einen distalen Endabschnitt und ein diese verbindendes Verbindungsstück aufweist, und wobei die zweite Feststell-Komponente und beispielsweise die erste Anschlagvorrichtung dadurch realisiert ist, dass an dem proximalen Endabschnitt ist ein proximales Mobilanschlagteil ausgebildet ist, das sich von der ersten Anschlagvorrichtung aus in Bezug auf die Spindel-Längsachse radial erstreckt. Zusätzlich kann an dem distalen Endabschnitt ein distaler Mobilanschlagteil ausgebildet sein, das sich von der ersten Anschlagvorrichtung aus in Bezug auf die Spindel-Längsachse radial erstreckt.

Bei den Ausführungsformen des erfindungsgemäßen Linear-Verstellers kann die zweite Feststell-Komponente und beispielsweise die erste Anschlagvorrichtung klammerartig, brückenförmig oder bogenförmig geformt ist.

Bei den Ausführungsformen des erfindungsgemäßen Linear-Verstellers kann dieser derart realisiert sein, dass die Feststellvorrichtung am proximalen Endabschnitt ausgebildet ist.

Bei den Ausführungsformen des erfindungsgemäßen Linear-Verstellers kann dieser einen ersten Basiskörper als erste Feststell-Komponente und eine erste Anschlagvorrichtung als zweite Feststell-Komponente aufweisen, wobei eine am zweiten Basiskörper angeordnete zweite Anschlagvorrichtung ein zweites Distanzstück und ein Komplementäranschlagteil aufweist, wobei das zweite Distanzstück vom zweiten Basiskörper aus in Richtung der Spindel-Längsachse zum ersten Ende hin weg ragt und das zweite Distanzstück einen Verbindungsabschnitt, der mit dem zweiten Basiskörper drehfest verbunden ist, einen Anschlagabschnitt und ein diese verbindendes Verbindungsstück aufweist.

Bei diesen Ausführungsformen kann das Komplementäranschlagteil an dem Anschlagabschnitt angeordnet sein und sich von dem Anschlagabschnitt aus in Bezug auf die Spindel-Längsachse radial nach außen erstrecken, wobei in dem Fall, dass an dem distalen Endabschnitt ein distales Mobilanschlagteil ausgebildet ist, dieses sich von dem distalen Endabschnitt der ersten Anschlagvorrichtung aus in Bezug zur Spindel-Längsachse radial erstreckt, so dass in einem Anschlagzustand bei einem Zustand des Linear-Verstellers bei maximaler Verstellerlänge das Komplementär-Anschlagteil und das distale Mobil-Anschlagteil in radialer Richtung einander überlappend in gegenseitiger Anlage befinden.

Bei den Ausführungsformen des erfindungsgemäßen Linear-Verstellers mit einem an der zweiten Anschlagvorrichtung angeordneten zweiten Distanzstück kann das zweite Distanzstück rohrförmig ausgebildet sein.

Die Aufgabe der Bereitstellung einer Positionier-Vorrichtung mit dem erfindungsgemäßen Linear-Versteller wird mit den Merkmalen des Anspruchs 7 gelöst.

Erfindungsgemäß ist eine Positionier-Vorrichtung mit einem Linear-Versteller, der nach einer der Ausführungsformen des erfindungsgemäßen Linear-Verstellers gebildet ist, vorgesehen. Dabei kann insbesondere vorgesehen sein, dass an einem der Enden des Linear-Verstellers insbesondere mittels einer Anschlussvorrichtung eine Anwendungskomponente ankoppelbar und an einem anderen der Enden insbesondere mittels einer Anschlussvorrichtung eine Anwendungskomponente ankoppelbar ist.

Die Aufgabe der Bereitstellung einer Positionier-Anordnung mit zumindest zwei und insbesondere sechs erfindungsgemäßen Linear-Verstellern wird mit den Merkmalen des Anspruchs 8 gelöst.

Die erfindungsgemäße Positionier-Anordnung weist zumindest zwei und insbesondere sechs Linear-Versteller jeweils nach einer der Ausführungsformen des erfindungsgemäßen Linear-Verstellers auf, wobei die zumindest zwei Linear-Versteller derart angeordnet sind, dass deren Spindel-Längsachse zueinander entlang verlaufen, wobei an einer Seite der Positionier-Anordnung die zumindest zwei Linear-Versteller jeweils an eine Anwendungskomponente ankoppelbar sind und an einer zweiten Seite der Positionier-Anordnung, die in Bezug auf die Spindel-Längsachse entgegen gesetzt zu der ersten Seite der Positionier-Anordnung gelegen ist, die zumindest zwei Linear-Versteller an eine weitere Anwendungskomponente ankoppelbar sind oder mit einer Referenzfläche in Anlage gebracht werden können.

Die Aufgabe der Bereitstellung einer Verwendung von zumindest zwei erfindungsgemäßen Linear-Verstellern wird mit den Merkmalen des Anspruchs 9 gelöst.

Die erfindungsgemäße Verwendung von zumindest zwei Linear-Verstellern jeweils nach einer der Ausführungsformen des erfindungsgemäßen Linear-Verstellers in einer Positionier-Anordnung sieht vor, dass die zumindest zwei Linear-Versteller derart angeordnet werden, dass deren Spindel-Längsachse zueinander entlang verlaufen, wobei an einer Seite der Positionier-Anordnung die zumindest zwei Linear-Versteller an eine Anwendungskomponente angekoppelt werden und an einer zweiten Seite der Positionier-Anordnung, die in Bezug auf die Spindel-Längsachse entgegen gesetzt zu der ersten Seite der Positionier-Anordnung gelegen ist, die zumindest zwei Linear-Versteller an eine weitere Anwendungskomponente angekoppelt werden oder mit einer Referenzfläche in Anlage gebracht werden.

Die Aufgabe der Bereitstellung eines Verfahrens zur Instandsetzung eines erfindungsgemäßen Linear-Verstellers wird mit den Merkmalen des Anspruchs 10 gelöst.

Das erfindungsgemäße Verfahren zur Instandsetzung eines Linear-Verstellers nach einer der Ausführungsformen des erfindungsgemäßen Linear-Verstellers sieht vor, dass mittels der Feststellvorrichtung die erste Anschlagvorrichtung an dem ersten Basiskörper oder die zweite Anschlagvorrichtung an dem zweiten Basiskörper in einem Anschlag-Bereitstellungszustand fixiert ist, bei dem der Anschlagzustand bei der Einfahrbewegung eintritt, wobei das Verfahren die folgenden Schritte aufweist:
Lösen der Feststellvorrichtung und Bewegen der ersten Anschlagvorrichtung gegenüber dem ersten Basiskörper oder Bewegen der zweiten Anschlagvorrichtung gegenüber dem zweiten Basiskörper mit einer Bewegungskomponente, die der Anschlag-Verstellbewegung entgegen gesetzt ist, so dass der Linear-Versteller in einem Anschlag-Freigabezustand ist, Bewegen der Stellteile von der Anschlag-Fahrposition aus mit dem Spindel-Spindelmutter-Mechanismus relativ zueinander in der Einfahrbewegung oder der Ausfahrbewegung.

Der Ausdruck "entlang" bedeutet hierin im Zusammenhang einer hierin genannten Richtungsangabe, die insbesondere auch den Verlauf einer Konturlinie oder einer Oberfläche oder die eine Richtung einer Strukturkomponente wie einer Mittelachse oder einer Achse oder einer Welle betreffen kann, in Bezug auf eine Bezugsrichtung oder eine Bezugsachse, dass ein Abschnitt der Richtungsangabe oder der Tangente an eine jeweilige Konturlinie oder jeweilige Oberfläche in einer explizit oder implizit vorgegebenen Blickrichtung lokal oder abschnittsweise mit einem Winkel von maximal 45 Grad und Insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang einer hierin genannten Richtungsangabe, die insbesondere auch den Verlauf einer Konturlinie oder einer Oberfläche oder die eine Richtung einer Strukturkomponente wie einer Mittelachse oder einer Achse oder einer Welle betreffen kann, in Bezug auf eine Bezugsrichtung oder eine Bezugsachse, dass ein Abschnitt der Richtungsangabe oder der Tangente an eine jeweilige Konturlinie oder jeweilige Oberfläche in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 113 Grad beträgt, von der jeweiligen Bezugsrichtung bzw. Bezugsachse abweicht, auf die die jeweilige Richtungsangabe bezogen ist.

Unter dem Begriff "Abstand" insbesondere zwischen zwei Flächen wird hierin insbesondere der kürzeste Abstand verstanden.

Für die Beschreibung der Erfindung ist der Begriff "Lage" eines Körpers definiert durch die Orientierung des Körpers im Raum, die durch Drehkoordinaten des Körpers angegeben sein können Unter dem hierin verwendeten Begriff "lagefixiert" wird hierin ein Zustand beschrieben, bei dem die Lage des Körpers unverändert bleibt.

Unter der Bezeichnung "kontinuierlich" oder "kontinuierlich zusammenhängend" insbesondere in Bezug auf eine Fläche oder einer sich in zumindest einer Längsrichtung erstreckenden Strukturkomponente, wie eine Haut, eine Platte oder Wandung, wird hierin verstanden, dass die Fläche oder Strukturkomponente ununterbrochen verläuft.

Unter "Orientierung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Im Folgenden werden Ausführungsformen der Erfindung an Hand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen hierin beschriebenen Ausführungsform aufweisen kann, und zwar jeweils als zusätzliches Merkmal dieser betreffenden Ausführungsform oder als alternatives Merkmal, das ein anderes Merkmal dieser betreffenden Ausführungsform ersetzt. Die Figuren zeigen:
Figur 1 eine perspektivische Darstellung einer Ausführungsform der erfindungsmäßen Linear-Verstellers, wobei der Linear-Versteller in einer extrem ausgefahrenen Stellung innerhalb eines vorbestimmten Verstellbereichs gezeigt ist,
Figur 2 die Ausführungsform des Linear-Verstellers nach der Figur 1 in perspektivischer Darstellung, wobei der Linear-Versteller in einer extrem eingefahrenen Stellung innerhalb des vorbestimmten Verstellbereichs gezeigt ist,
Figur 3 eine kinematische Darstellung Ausführungsform des Linear-Verstellers nach der Figur 1,
Figur 4 eine Schnittdarstellung der Ausführungsform des Linear-Verstellers nach der Figur 1 in der extrem ausgefahrenen Stellung der Figur 1,
Figur 5 eine Schnittdarstellung der Ausführungsform des Linear-Verstellers nach der Figur 1 in der extrem eingefahrenen Stellung der Figur 2,
Figur 6 eine perspektivische Darstellung einer weiteren Ausführungsform der erfindungsmäßen Linear-Verstellers, wobei der Linear-Versteller in einer extrem ausgefahrenen Stellung innerhalb eines vorbestimmten Verstellbereichs gezeigt ist,
Figur 7 die Ausführungsform des Linear-Verstellers nach der Figur 6 in perspektivischer Darstellung, wobei der Linear-Versteller in einer extrem eingefahrenen Stellung innerhalb des vorbestimmten Verstellbereichs gezeigt ist,
Figur 8 eine kinematische Darstellung Ausführungsform des Linear-Verstellers nach der Figur 6,
Figur 9 eine Schnittdarstellung der Ausführungsform des Linear-Verstellers nach der Figur 6 in der extrem ausgefahrenen Stellung der Figur 6,
Figur 10 eine Schnittdarstellung der Ausführungsform des Linear-Verstellers nach der Figur 6 in der extrem eingefahrenen Stellung der Figur 7.

Der nach der Erfindung vorgesehene Linear-Versteller 1 ist als längenveränderliche Verstellvorrichtung mit einem Spindel-Spindelmutter-Mechanismus 2 und mit einer ersten Anschlagvorrichtung 30 und einer zweiten Anschlagvorrichtung 40 ausgeführt. Dabei kann vorgesehen sein, dass mit dem Linear-Versteller 1 Verstellerlängen zwischen einer minimalen Verstellerlänge und einer maximalen Verstellerlänge, jeweils wenn der Linear-Versteller 1 die erste Anschlagvorrichtung 30 und die zweite Anschlagvorrichtung 40 nicht aufweist, oder zeitliche Ableitungen in Abhängigkeit einer aktuellen Verstellerlänge wie Geschwindigkeiten und Beschleunigungen eingestellt werden. Der Spindel-Spindelmutter-Mechanismus 2 weist eine Spindel 3, die sich in einer Spindel-Längsachse L3 erstreckt, und eine Spindelmutter 5 auf, die auf einem Spindelgewinde 4 der Spindel 3 gelagert ist. Bei Drehung von Spindel 3 und Spindelmutter 5 relativ zueinander bewegen sich die Spindel 3 und die Spindelmutter 5 relativ zueinander in der Spindel-Längsachse L3. Der Linear-Versteller 1 weist ein erstes Stellteil 10 und ein zweites Stellteil 20 auf, die durch den Spindel-Spindelmutter-Mechanismus 2 aufgrund der Drehung von Spindel 3 und Spindelmutter 5 relativ zueinander in der Spindel-Längsachse L3 in Stellzustände mit unterschiedlichen Stellungen relativ zueinander bewegbar sind.

Dabei kann der Linear-Versteller 1, wenn die erste Anschlagvorrichtung 30 und die zweite Anschlagvorrichtung 40 nicht an dem Linear-Versteller 1 vorhanden sind, Stellzustände einnehmen, die zwischen folgenden extremen Stellzuständen liegen:
(a) einem kürzesten Stellzustand, bei dem die Relativstellung von Spindel 3 und Spindelmutter 5 eine minimale Verstellerlänge des Linear-Verstellers 1, also einen minimal eingefahrenen Stellzustand, herstellt,
(b) einem größten Stellzustand, bei dem die Relativstellung von Spindel 3 und Spindelmutter 5 eine maximale Verstellerlänge des Linear-Verstellers 1, also einen maximal ausgefahrenen Stellzustand, herstellt.

Der kürzeste Stellzustand oder der größte Stellzustand kann jeweils durch ein entsprechend gestaltetes Ende des Spindelgewindes 4 oder einen entsprechend gestalteten Bewegungsanschlag der Spindelmutter 5 am Spindelgewinde 4 definiert oder eingestellt sein.

Der Linear-Versteller 1 kann selbst einen Motor 7 aufweisen, der Bestandteil des Linear-Verstellers 1 ist, der den Spindel-Spindelmutter-Mechanismus 2 antreiben kann und dadurch Spindel 3 und Spindelmutter 5 relativ zueinander in Drehung versetzen kann, um die Länge des Linear-Verstellers 1 zu verstellen. Dabei kann der Linear-Versteller 1 derart realisiert sein, dass der Motor 7 entweder die Spindel 3 oder die Spindelmutter 5 in Drehung versetzt. Der Motor 7 treibt den Spindel-Spindelmutter-Mechanismus 2 aufgrund des Empfangs von Stellkommandos an. Die Stellkommandos werden in einer Steuerungsvorrichtung oder einer Regelungsvorrichtung erzeugt und definieren eine Soll-Bewegung des Motors 7 oder eine Soll-Verstellerlänge oder eine zeitliche Ableitung derselben.

Nach einer weiteren Ausführungsform weist der Linear-Versteller 1 selbst keinen Motor als Bestandteil des Linear-Verstellers 1 auf, sondern wird von außen verstellt, insbesondere indem eine äußere Stellvorrichtung die Positionen der Stellteile 10, 20 oder die Drehstellungen der Endabschnitte 1a, 1b relativ zueinander verstellt oder indem der Stellzustand des Spindel-Spindelmutter-Mechanismus 2, also der Spindel 3 oder der Spindelmutter 5, geändert wird. Beispielsweise kann vorgesehen sein, dass die Relativ-Position der Stellteile 10, 20 durch einen Linear-Versteller 1 nach der Erfindung oder nach dem Stand der Technik verstellt wird, der einen Motor 7 aufweist und dessen erstes Stellteil mit dem ersten Stellteil 10 und dessen zweiten Stellteil mit dem zweiten Stellteil 20 gekoppelt ist. Dabei kann insbesondere vorgesehen sein, dass die Spindel 3 drehfest am ersten Basiskörper 11 gelagert und die Spindelmutter 5 drehfest am zweiten Basiskörper 21 ist.

Das erste Stellteil 10 weist einen ersten Basiskörper 11, der an einem ersten Ende E1 des Linear-Verstellers 1 gelegen ist, und die erste Anschlagvorrichtung 30 auf. Das zweite Stellteil 20 weist einen zweiten Basiskörper 21, der an einem zweiten Ende E2 des Linear-Verstellers 1 gelegen ist, und die zweite Anschlagvorrichtung 40 auf. Der erste Basiskörper 11 bildet einen ersten Endabschnitt 1a und der zweite Basiskörper 21 bildet einen zweiten Endabschnitt 1b des Linear-Verstellers 1.

Bei den dargestellten Ausführungsformen des Linear-Verstellers 1 kann der erste Basiskörper 11 einen ersten Basiskörper-Boden 15 oder ein erstes Basiskörper-Bodenteil aufweisen, der oder das becherförmig mit einer Bodenplatte und mit einem die Spindel-Längsachse L3 umlaufenden Wandungsabschnitt 16 gebildet ist, der sich zum zweiten Ende E2 hin erstreckt. Alternativ dazu kann der erste Basiskörper-Boden 15 oder das erste Basiskörper-Bodenteil auch insgesamt plattenförmig gebildet sein. Dabei ist an dem ersten Basiskörper-Boden 15, und zwar an dessen dem zweiten Ende E2 zugewandten Ende, ein zylinderförmiger Verlängerungsabschnitt 17 befestigt, der die Spindel-Längsachse L3 kontinuierlich umläuft und sich von dem ersten Basiskörper-Boden 15 aus zum zweiten Ende E2 hin erstreckt. Der Verlängerungsabschnitt 17 kann auch gitterförmig gebildet sein. Alternativ dazu kann der Verlängerungsabschnitt 17 auch gabelförmig mit zumindest zwei Gabeln gebildet sein. Auch können der erste Basiskörper-Boden 15 und der Verlängerungsabschnitt 17 einstückig gebildet oder aus einem Stück hergestellt sein. Sämtliche Ausführungsformen des Linear-Verstellers 1 können auch ohne Verlängerungsabschnitt 17 gebildet sein.

Bei den dargestellten Ausführungsformen des Linear-Verstellers 1 ist der Motor 7 von der umlaufenden Wand des Verlängerungsabschnitts 17 aufgenommen und von dieser fixiert oder festgeklemmt. Der Motor 7 kann alternativ dazu oder zusätzlich auch mittels zumindest eines Verbindungselements oder mittels Klebstoff an dem Verlängerungsabschnitt 17 oder dem ersten Basiskörper-Boden 15 oder ein erstes Basiskörper-Bodenteil befestigt und fixiert sein. Alternativ dazu kann der Motor 7 auch an dem ersten Basiskörper-Boden 15 oder gegebenenfalls einem umlaufenden Wandungsabschnitt 16 befestigt sein.

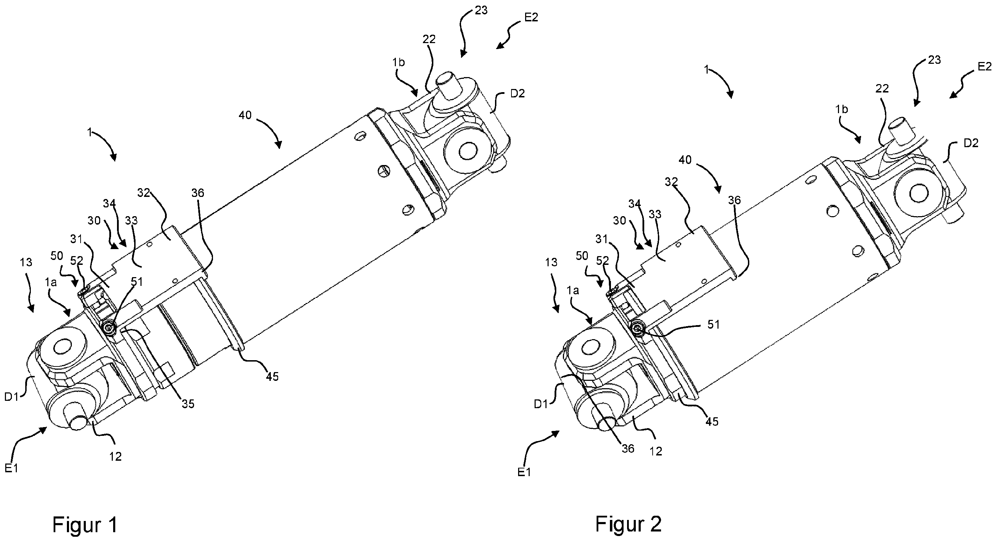

Der erste Endabschnitt 1a erstreckt sich von dem ersten Basiskörper-Boden 15 aus in einer Richtung, die von dem zweiten Ende E2 weg gerichtet ist. Der Linear-Versteller 1 kann jedoch auch ohne den ersten Endabschnitt 1a ausgebildet sein. Der erste Endabschnitt 1a kann, wie in den Figuren 1 bis 10 dargestellt, als eine erste Lagerungsvorrichtung 12 zur Anlagerung oder Ankopplung des Linear-Verstellers 1 an eine erste Anwendungskomponente gebildet sein.

Die beschriebenen Varianten des ersten Basiskörpers 11 können bei allen Ausführungsformen des Linear-Verstellers 1 realisiert sein.

Bei den dargestellten Ausführungsformen des Linear-Verstellers 1 weist der zweite Basiskörper 21 einen zweiten Basiskörper-Boden 25 oder ein zweites Basiskörper-Bodenteil auf, der oder das becherförmig mit einer Bodenplatte und mit einem die Spindel-Längsachse L3 umlaufenden Wandungsabschnitt 26 gebildet ist und sich zum ersten Ende E1 hin erstreckt. Alternativ dazu kann der zweite Basiskörper-Boden 25 oder das zweite Basiskörper-Bodenteil auch plattenförmig gebildet sein. Der zweite Basiskörper-Boden 25 oder das zweite Basiskörper-Bodenteil und der Wandungsabschnitt 26 können einstückig gebildet sein. Diese können auch aus einem Stück hergestellt sein oder als getrennt Bauteile aneinander befestigt sein. Sämtliche Ausführungsformen des Linear-Verstellers 1 können auch ohne Wandungsabschnitt 26 gebildet sein.

Der zweite Endabschnitt 1b erstreckt sich von dem zweiten Basiskörper-Boden 25 aus in einer Richtung, die von dem ersten Ende E1 weg gerichtet ist. Der Linear-Versteller 1 kann jedoch auch ohne den zweiten Endabschnitt 1b ausgebildet sein. Der zweite Endabschnitt 1b kann, wie in den Figuren 1 bis 9 dargestellt, als eine zweite Lagerungsvorrichtung 12 zur Anlagerung oder Ankopplung des Linear-Verstellers 1 an eine zweite Anwendungskomponente gebildet sein.

Die beschriebenen Varianten des zweiten Basiskörpers 21 können bei allen Ausführungsformen des Linear-Verstellers 1 realisiert sein.

Die erste Anschlagvorrichtung 30 erstreckt sich von dem ersten Basiskörper 11 aus in Richtung der Spindel-Längsachse L3 zum zweiten Ende E2 hin. Bei den Ausführungsformen der Figuren 1 bis 10 ist die erste Anschlagvorrichtung 30 klammerförmig oder brückenförmig gebildet. Die erste Anschlagvorrichtung 30 kann in einer Umfangsrichtung, die die Spindel-Längsachse L3 umläuft, drehfest oder fixiert am ersten Basiskörper 11 gelagert sein.

Die zweite Anschlagvorrichtung 40 erstreckt sich von dem zweiten Basiskörper 21 aus in Richtung der Spindel-Längsachse L3 zum ersten Ende E1 hin. Die zweite Anschlagvorrichtung 40 ist, wie in den Figuren 1 bis 10 dargestellt, in einer Umfangsrichtung, die die Spindel-Längsachse L3 umläuft, drehfest oder fixiert am zweiten Basiskörper 21 und insbesondere am Wandungsabschnitt 26 befestigt. Dabei ist die zweite Anschlagvorrichtung 40 als ein zylinderförmiger Abschnitt realisiert, der die Spindel-Längsachse L3 kontinuierlich umläuft und sich von dem zweiten Basiskörper-Boden 25 aus zum zweiten Ende E2 hin erstreckt. Die zweite Anschlagvorrichtung 40 kann alternativ dazu auch gitterförmig gebildet sein. Alternativ dazu kann der Verlängerungsabschnitt 17 auch stabförmig oder gabelförmig mit zumindest zwei Gabeln gebildet sein. Die beschriebenen Varianten der zweiten Anschlagvorrichtung 40 können bei allen Ausführungsformen des Linear-Verstellers 1 realisiert sein.

Jede der Ausführungsformen des erfindungsgemäßen Linear-Verstellers 1 kann, wie in den Figuren 1 und 2 gezeigt ist, derart realisiert sein, dass dieser ein erstes Drehlager D1 aufweist, das in der ersten Lagerungsvorrichtung 12 gelagert ist, um den ersten Basiskörper 11 mit der ersten Anwendungskomponente zu koppeln. Alternativ oder zusätzlich kann jede der Ausführungsformen des erfindungsgemäßen Linear-Verstellers 1, wie in den Figuren 1 und 2 gezeigt ist, derart realisiert sein, dass dieser ein zweites Drehlager D2 aufweist, das in der zweiten Lagerungsvorrichtung 22 gelagert ist, um den zweiten Basiskörper 21 mit der zweiten Anwendungskomponente zu koppeln. In den Figuren 1 und 2 ist gezeigt, dass die erste Lagerungsvorrichtung 12 und das erste Drehlager D1 eine erste Anschlussvorrichtung 13 ausbilden können und dass die zweite Lagerungsvorrichtung 22 und das zweite Drehlager D2 eine zweite Anschlussvorrichtung 23 ausbilden können. Dabei sind die erste Lagerungsvorrichtung 12 und die zweite Lagerungsvorrichtung 22 relativ zueinander drehfest angeordnet, so dass auch der erste Basiskörper 11 und der zweiten Basiskörper 21 zueinander drehfest angeordnet sind.

Jede der Ausführungsformen des erfindungsgemäßen Linear-Verstellers 1 kann derart realisiert sein, dass die erste Lagerungsvorrichtung 12 oder die zweite Lagerungsvorrichtung 22 nicht vorhanden ist oder beide Lagerungsvorrichtung 12, 22 nicht vorhanden sind.

Die Spindel 3 ist am ersten Basiskörper 11 gelagert und die Spindelmutter 5 ist am zweiten Basiskörper 21 gelagert. Nach der Erfindung können folgende Realisierungen vorgesehen sein:
(R1) Die Spindel 3 ist am ersten Basiskörper 11 relativ zu diesem drehbar und in Richtung der Spindel-Längsachse L3 fixiert gelagert und die Spindelmutter 5 ist drehfest am zweiten Basiskörper 21 gelagert;
(R2) die Spindel 3 ist drehfest am ersten Basiskörper 11 gelagert und die Spindelmutter 5 ist am zweiten Basiskörper 21 relativ zu diesem drehbar und in Richtung der Spindel-Längsachse L3 fixiert gelagert.

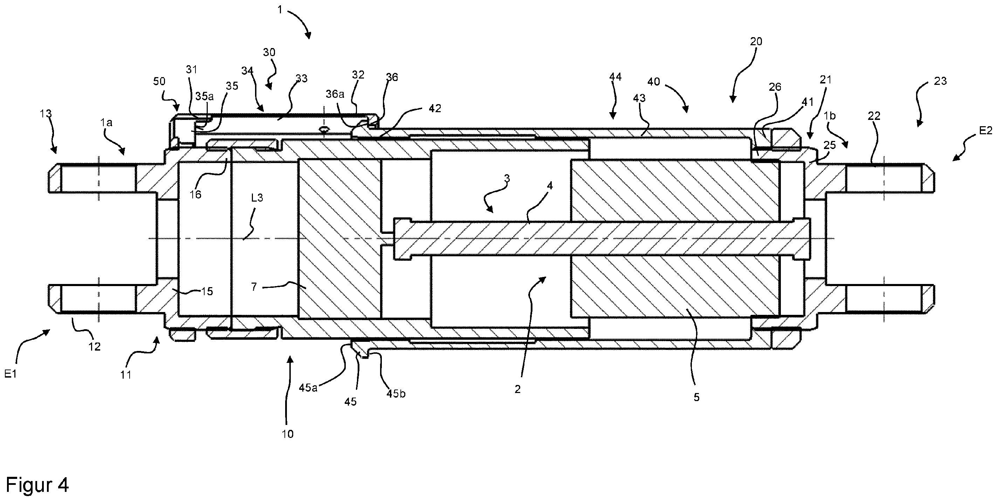

In dem Fall, dass der Linear-Versteller 1 einen Motor 7 aufweist, kann dieser bei der Realisierung (R1) derart in dem Linear-Versteller 1 integriert sein, dass der Motor 7 die Spindel 3 antreibt und diese in Drehung versetzt, um den Stellzustand des Linear-Verstellers 1 zu verändern. Dabei kann der Motor 7 am ersten Basiskörper 11 gelagert sein. Diese Ausführungsform des Linear-Verstellers 1 ist in der Figur 4 gezeigt. Alternativ dazu kann der Motor 7 am zweiten Basiskörper 21 gelagert sein. In dem Fall, dass der Linear-Versteller 1 einen Motor 7 aufweist, kann dieser bei der Realisierung (R2) derart in dem Linear-Versteller 1 integriert sein, dass der Motor 7 die Spindelmutter 5 antreibt und diese in Drehung versetzt, um den Stellzustand des Linear-Verstellers 1 zu verändern. Dabei kann der Motor 7 am zweiten Basiskörper 21 oder, alternativ dazu am ersten Basiskörper 11 gelagert sein. Bei weiteren Ausführungsformen können die zu den Realsierungen (R1) und (R2) beschriebenen Alternativen auch miteinander kombiniert sein. Bei den hierzu beschriebenen Ausführungsformen kann insbesondere vorgesehen sein, dass die Endabschnitte 1a, 1b durch eine äußere Lagerung oder Anwendungskomponenten zueinander drehfest gelagert sind. Alternativ dazu können die Endabschnitte 1a, 1b durch eine äußere Lagerung oder Anwendungskomponenten zueinander drehbar gelagert sein.

Sowohl das erste Stellteil 10 als auch das zweite Stellteil 20 oder eines der Stellteile 10, 20 kann als Stützbein ausgebildet sein, bei dem die jeweilige Lagerungsvorrichtung 12 oder 22 als Fußteil oder Anlageteil realisiert ist. Somit kann der Linear-Versteller 1 mit dem ersten oder dem zweiten Stellteil 10, 20 auf einem Boden oder einer Referenzfläche wie die Oberfläche eines Tisches oder einer Laboreinrichtung aufgestellt oder an einer Referenzkomponente angeordnet oder montiert sein, während eine Anwendungskomponente an das jeweils andere der beiden Stellteile 10, 20 montiert oder angekoppelt oder diese in Anlage mit dem jeweils anderen der beiden Stellteile 10, 20 gebracht sein kann, um diese relativ zum Boden oder zur Referenzfläche zu bewegen.

Eine Anwendungskomponente kann bei allen Ausführungsformen der Erfindung generell eine gegenüber einem Boden oder einer Referenzfläche verstellbare Funktionskomponente und z.B. ein Sensor, ein Spiegel, ein Werkzeug sein.

Nach der Erfindung kann der Linear-Versteller 1 nach der Erfindung eine Positionier-Vorrichtung bilden. Die Positionier-Vorrichtung kann insbesondere die erste Anschlussvorrichtung 13 und die zweite Anschlussvorrichtung 23 aufweisen. Weiterhin kann die Positionier-Vorrichtung einen Motor 7 aufweisen, der nach einer hierin beschriebenen Realisierung in dem Linear-Versteller 1 integriert ist. Weiterhin kann der Linear-Versteller 1 eine Ansteuerungs-Schnittstelle aufweisen, die funktional mit dem Motor 7 verbunden ist, und die ein einem Soll-Stellzustand entsprechendes Stellkommando oder ein Sollsignal an den Motor 7 übermittelt, wobei der Motor 7 aufgrund des Sollsignals den Spindel-Spindelmutter-Mechanismus 2 derart betätigt, dass der Linear-Versteller 1 in Richtung zu dem Soll-Stellzustand und insbesondere in einen Stellzustand nahe dem Soll-Stellzustand verstellt wird. Das Sollsignal kann beispielsweise durch manuelle Betätigung einer Eingabevorrichtung oder durch eine funktional mit der Ansteuerungs-Schnittstelle verbundene externe Steuerung an die Ansteuerungs-Schnittstelle übermittelt werden. Diese kann funktional mit der zumindest einen Anwendungskomponente in Verbindung stehen.

Generell kann ein erfindungsgemäßer Linear-Versteller 1 oder können mehrere erfindungsgemäße Linear-Versteller 1 zwischen zwei Anwendungskomponenten angeordnet und an diesen gelagert oder zwischen einer Anwendungskomponente und einer Referenzfläche oder Referenzvorrichtung sein. Dabei kann der Abstand bzw. die Lage zwischen den zwei Anwendungskomponenten durch Einstellung der Verstellerlänge des zumindest einen Linear-Verstellers 1 eingestellt werden. Erfindungsgemäß wird unter Referenzfläche oder Referenzvorrichtung eine Fläche oder Vorrichtung verstanden, die mit dem Linear-Versteller 1 in Position und Lage nicht zu verstellen ist, sondern gegenüber der eine Anwendungskomponente hinsichtlich ihrer Lage oder Position oder in Lage und Position zu verstellen ist.

Nach der Erfindung können auch zumindest zwei Linear-Versteller 1 nach einer der hierin beschriebenen erfindungsgemäßen Ausführungsformen eine Positionier-Anordnung ausbilden. Dabei können die zumindest zwei Linear-Versteller 1 insbesondere derart angeordnet sein, dass deren Spindel-Längsachse L3 zueinander entlang verlaufen. An einer Seite der Positionier-Anordnung, an der beispielsweise die ersten Enden oder die zweiten Enden der zumindest zwei Linear-Versteller 1 gelegen sein können, sind die zumindest zwei Linear-Versteller 1 an eine Anwendungskomponente angekoppelt und an einer zweiten Seite der Positionier-Anordnung, die in Bezug auf die Spindel-Längsachse L3 entgegen gesetzt zu der ersten Seite der Positionier-Anordnung gelegen ist, sind die zumindest zwei Linear-Versteller 1 an eine weitere Anwendungskomponente angekoppelt oder mit einer Referenzfläche in Anlage gebracht oder verbunden. Dabei kann zumindest eine der Linear-Versteller 1 oder mehrerer oder sämtliche der Linear-Versteller 1 die vorgenannte Ansteuerungs-Schnittstelle aufweisen. Auch kann die Positionier-Anordnung eine externe Steuerung aufweisen, die die zumindest eine Ansteuerungs-Schnittstelle mit einem Sollsignal ansteuert. Dabei können die Linear-Versteller 1 einer Positionier-Anordnung mit dem ersten oder dem zweiten Stellteil 10, 20 auf einem Boden oder einer Referenzfläche angeordnet oder an einer Referenzkomponente oder einer Anwendungskomponente montiert sein, während eine gegebenenfalls weitere Anwendungskomponente an das jeweils andere der beiden Stellteile 10, 20 montiert oder angekoppelt oder in Anlage gebracht sein kann.

Beispielsweise kann die Positionier-Anordnung oder die Mehrzahl von Linear-Verstellern 1 als ein Parallelkinematik-Mechanismus mit zumindest zwei Linear-Verstellern 1 nach einer oder mehreren der hierin beschriebenen erfindungsgemäßen Ausführungsformen ausgebildet sein. Dabei kann insbesondere vorgesehen sein, dass die Spindel-Längsachsen L3 der zumindest zwei Linear-Versteller 1 derart zueinander parallel oder in einem Winkel zueinander verlaufen, dass der kleinste Winkel, indem die Spindel-Längsachsen L3 der Linear-Versteller 1 zueinander verlaufen, maximal 45 Grad beträgt. Insbesondere kann die Positionier-Anordnung drei Linear-Versteller 1 nach einer oder mehreren der hierin beschriebenen erfindungsgemäßen Ausführungsformen aufweisen und als sogenannter Tripod ausgebildet sein. Zudem kann die Positionier-Anordnung in bevorzugter Weise sechs Linear-Versteller 1 nach einer oder mehreren der hierin beschriebenen erfindungsgemäßen Ausführungsformen aufweisen und als sogenannter Hexapod ausgebildet sein.

Je nach der relativen Position der beiden Stellteile 10, 20 zueinander hat der bzw. haben die Linear-Versteller 1 in einem Stellzustand eine Verstellerlänge LV, die sich durch entsprechende Definition von Längen-Endpunkten jeweils an einem Endabschnitt der beiden Endabschnitte 1a, 1b des Linear-Verstellers 1 als Abstand zwischen diesen Längen-Endpunkten ergibt.

Die erste Anschlagvorrichtung 30 und die zweite Anschlagvorrichtung 40 können generell derart gestaltet sein, dass diese eine Anschlag-Verstellbewegung relativ zueinander ausführen und in einen Anschlagzustand kommen können, bei denen zumindest eine Anlagefläche der ersten Anschlagvorrichtung 30 und zumindest eine Anlagefläche der zweiten Anschlagvorrichtung 40 aneinander anliegen, wenn der Linear-Versteller 1 eine Ausfahrbewegung ausführt, bei der eine Vergrößerung der Verstellerlänge LV erfolgt. In dem Anschlagzustand befinden sich das erste Stellteil 10 und das zweite Stellteil 20 in einer durch die Position und Gestalt der Anschlagvorrichtungen 30, 40 vorbestimmten Anschlag-Fahrposition relativ zueinander, bei der jeweils eine Anlage-Oberfläche der ersten Anschlagvorrichtung 30 und eine Anlage-Oberfläche der zweiten Anschlagvorrichtung 40 miteinander in Anlage sind und bei der die Verstellerlänge LV eine Anschlag-Maximalverstellerlänge Lmax aufweist. Ein solcher Verstellzustand ist in der Figur 4 gezeigt.

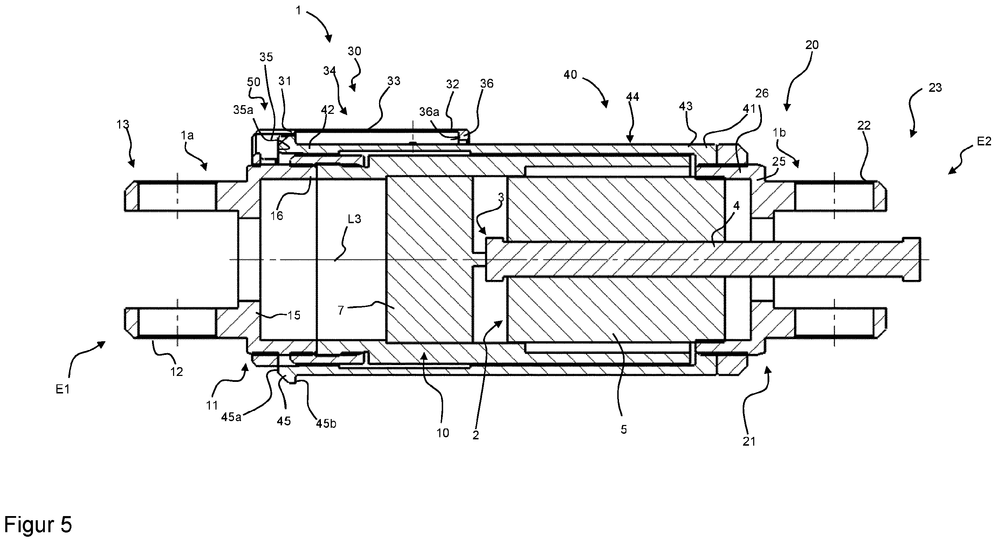

Alternativ oder zusätzlich dazu können die erste Anschlagvorrichtung 30 und die zweite Anschlagvorrichtung 40 generell derart gestaltet sein, dass diese eine Anschlag-Verstellbewegung relativ zueinander ausführen und in einen Anschlagzustand kommen können, bei denen zumindest eine Anlagefläche der ersten Anschlagvorrichtung 30 und zumindest eine Anlagefläche der zweiten Anschlagvorrichtung 40 aneinander anliegen, wenn der Linear-Versteller 1 eine Einfahrbewegung ausführt, bei der eine Reduzierung der Verstellerlänge LV erfolgt. In dem Anschlagzustand befinden sich das erste Stellteil 10 und das zweite Stellteil 20 in einer durch die Position und Gestalt der Anschlagvorrichtungen 30, 40 vorbestimmten Anschlag-Fahrposition relativ zueinander, bei der jeweils eine Anlage-Oberfläche der ersten Anschlagvorrichtung 30 und eine Anlage-Oberfläche der zweiten Anschlagvorrichtung 40 miteinander in Anlage sind und bei der die Verstellerlänge LV eine Anschlag-Minimalverstellerlänge Lmin aufweist. Ein solcher Verstellzustand ist in der Figur 5 gezeigt.

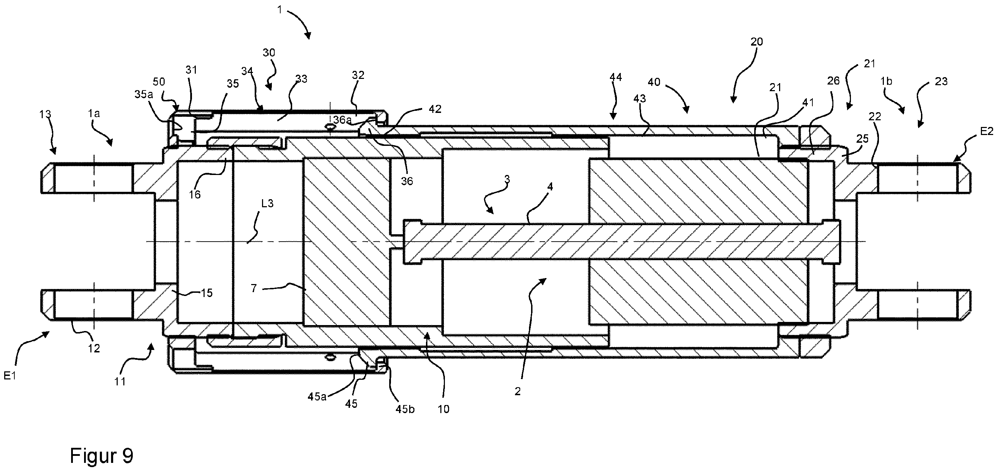

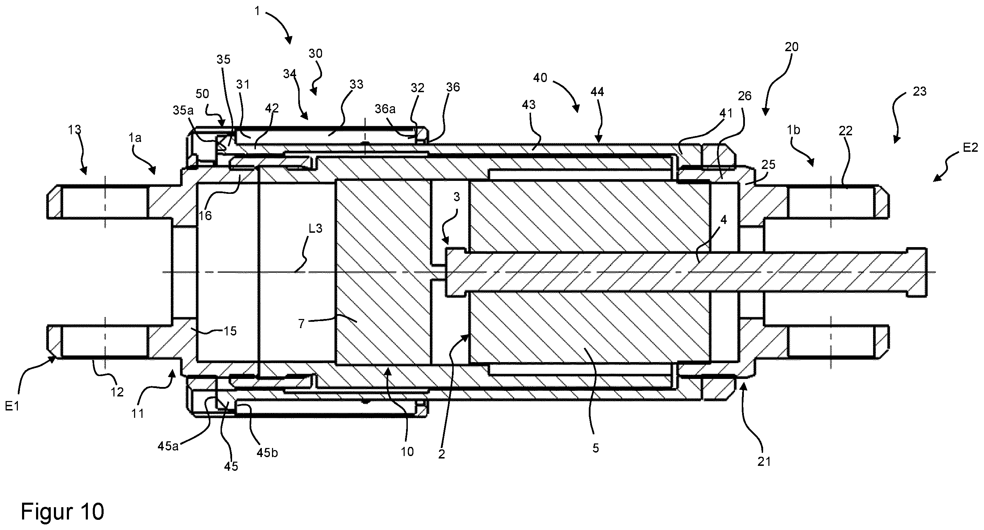

In den Figuren 1 bis 10 sind Ausführungsformen des Linear-Verstellers 1 gezeigt, bei denen beide der nachfolgenden Stellzustände (i), (ii) auftreten können:
(i) der in der Figur 4 und in der Figur 9 gezeigte Maximalverstellerlängen-Anschlagzustand, bei dem der Linear-Versteller 1 eine Anschlag-Maximalverstellerlänge Lmax einnimmt, wobei der Maximalverstellerlängen-Anschlagzustand eintritt und dadurch eine Ausfahrbewegung des Linear-Verstellers 1 gestoppt wird,
(ii) der in der Figur 5 und in der Figur 10 gezeigte Minimalverstellerlängen-Anschlagzustand, bei dem der Linear-Versteller 1 eine Anschlag-Minimalverstellerlänge Lmin einnimmt, wobei der Minimalverstellerlängen-Anschlagzustand eintritt und dadurch eine Einfahrbewegung des Linear-Verstellers 1 gestoppt wird.

Bei allen erfindungsgemäßen Ausführungsformen kann alternativ dazu der Linear-Versteller 1 mit der ersten Anschlagvorrichtung 30 und der zweiten Anschlagvorrichtung 40 derart gestaltet sein, dass nur der Anschlagzustand (ii) auftritt.

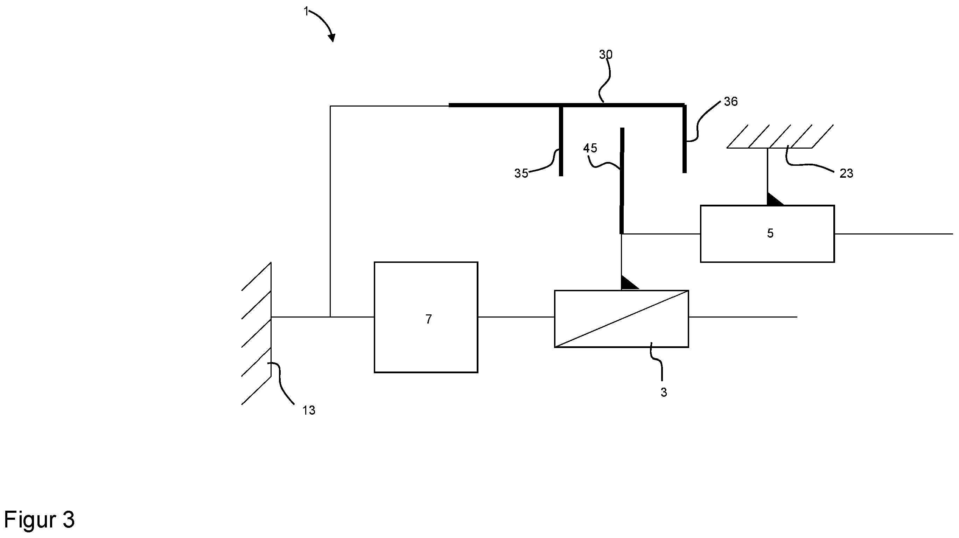

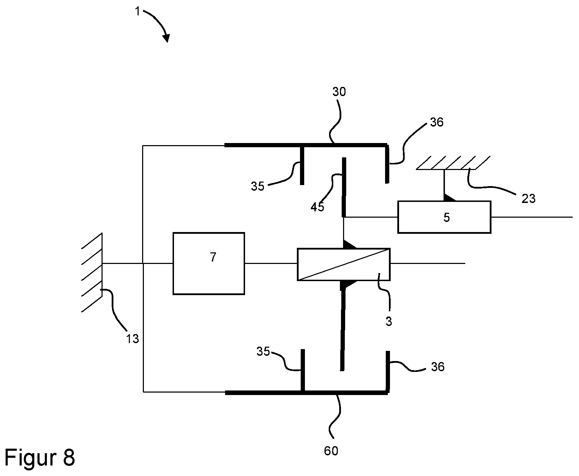

In den Figuren 3 und 8 sind schematisch jeweils ein Zwischen-Anschlagzustand gezeigt, also ein Anschlagzustand, der zwischen dem Maximalverstellerlängen-Anschlagzustand der Figur 4 bzw. Figur 9 und dem Minimalverstellerlängen-Anschlagzustand der Figur 5 bzw. Figur 10 liegt.

Bei der Ausführungsform der Figuren 4 und 5 sowie der Figuren 9 und 10 ist die erste Anschlagvorrichtung 30 derart ausgeführt, dass diese zwei Anlageflächen aufweist, die in der Spindel-Längsachse L3 voneinander beabstandet sind. Die Anlageflächen stellen jeweils einen der Anschlagzustände (i), (ii) als eintretbares Ereignis bereit.

Bei den in den Figuren gezeigten Ausführungsformen der Erfindung weist die erste Anschlagvorrichtung 30 ein erstes Distanzstück 34 und zumindest ein Mobilanschlagteil auf. Dabei ragt das erste Distanzstück 34 vom ersten Basiskörper 11 aus in Richtung der Spindel-Längsachse L3 zum zweiten Ende E2 hin weg und das erste Distanzstück 34 weist einen proximalen Endabschnitt 31, der relativ nahe dem ersten Basiskörper 11 oder dem ersten Ende E1 gelegen ist, und einen distalen Endabschnitt 32, der relativ fern dem ersten Basiskörper 11 oder dem ersten Ende E1 gelegen ist, und ein diese verbindendes erstes Verbindungsstück 33 auf.

Bei den Ausführungsformen des erfindungsgemäßen Linear-Verstellers 1 kann die erste Anschlagvorrichtung 30 insbesondere gemäß zumindest der Alternative (m) realisiert sein:
(m) an dem proximalen Endabschnitt 31 ist ein proximales Mobilanschlagteil 35 ausgebildet, das sich von dem ersten Verbindungsstück 33 aus in Bezug auf die Spindel-Längsachse L3 radial erstreckt,
(n) an dem distalen Endabschnitt 32 ist ein distales Mobilanschlagteil 36 ausgebildet, das sich von dem ersten Verbindungsstück 33 aus in Bezug auf die Spindel-Längsachse L3 radial erstreckt.

Bei den in den Figuren dargestellten Ausführungsformen der Erfindung ist sowohl die Realisierung (m) als auch die Realisierung (n) gegeben. In einer dazu alternativen Ausführungsform der Erfindung kann vorgesehen sein, dass die Realisierung (n) nicht vorhanden ist, also nur die Realisierung (m) vorhanden ist.

Dabei kann das proximale Mobilanschlagteil 35 als sich radial erstreckendes Übergangsstück zwischen dem ersten Basiskörper 11 und dem ersten Verbindungsstück 33 realisiert sein. Bei der dargestellten Ausführungsform erstrecken sich das proximale Mobilanschlagteil 35 und das distale Mobilanschlagteil 36 jeweils vom ersten Verbindungsstück 33 aus radial in Richtung auf die Spindel-Längsachse L3 zu.

Das erste Distanzstück 34 kann insbesondere klammerartig oder brückenartig ausgeführt sein, d.h. nicht rohrförmig und die Spindel-Längsachse L3 umlaufend, realisiert sein. Dabei kann die sich in der Spindel-Längsachse L3 erstreckende Länge des ersten Distanzstücks 34 um den Faktor 1,2 größer sein als die durchschnittliche Breite vertikal zu dieser Länge und zur radialen Richtung in Bezug auf die Spindel-Längsachse L3. Alternativ dazu kann das erste Distanzstück 34 rohrförmig und die Spindel-Längsachse L3 umlaufend, realisiert sein. Dabei kann das erste Distanzstück 34 die hierin beschriebenen Merkmale der zweiten Anschlagvorrichtung 40 aufweisen.

Bei jeder der Ausführungsformen des erfindungsgemäßen Linear-Verstellers 1 kann, wie in den Figuren gezeigt, die zweite Anschlagvorrichtung 40 ein zweites Distanzstück 44 und ein Komplementäranschlagteil 45 aufweisen. Dabei ragt das zweite Distanzstück 44 vom zweiten Basiskörper 21 aus in Richtung der Spindel-Längsachse L3 zum ersten Ende E1 hin weg. Das zweite Distanzstück 44 weist einen Verbindungsabschnitt 41, der mit dem zweiten Basiskörper 21 drehfest verbunden ist, einen Anschlagabschnitt 42 und ein diese verbindendes Verbindungsstück 43 auf. Das zweite Distanzstück 44 kann, wie in den Figuren gezeigt, insbesondere rohrförmig ausgebildet sein.

Bei den in den Figuren dargestellten Ausführungsformen des Linear-Verstellers 1 kann das Komplementäranschlagteil 45 ein Randabschnitt des Anschlagabschnitts 42 sein, wobei der Randabschnitt in Richtung der Spindel-Längsachse L3 zum ersten Ende E1 hin orientiert ist. Das Komplementäranschlagteil 45 bewegt sich zwischen den Stellzuständen (i) und (ii) in Richtung der Spindel-Längsachse L3 zwischen dem proximalen Mobilanschlagteil 35 und dem distalen Mobilanschlagteil 36. Alternativ oder zusätzlich dazu kann das Komplementanschlagteil 45 an dem Verbindungsstück 43 angeordnet sein und sich dabei von dem Anschlagabschnitt 42 aus in Bezug auf die Spindel-Längsachse L3 radial erstrecken. Dabei verläuft die Richtung, in der sich der Komplementäranschlagteil 45 von dem Anschlagabschnitt 42 aus in Bezug auf die Spindel-Längsachse L3 radial erstreckt, entgegen gesetzt zu der Richtung, in der sich das proximale Mobilanschlagteil 35 und das distale Mobilanschlagteil 36 von der ersten Anschlagvorrichtung 30 aus erstreckt.

Bei den in den Figuren dargestellten Ausführungsformen des Linear-Verstellers 1 weist das proximale Mobilanschlagteil 35 eine proximale Anlage-Oberfläche 35a und weist das distale Mobilanschlagteil 36 eine distale Anlage-Oberfläche 36b auf, wobei die proximale Anlage-Oberfläche 35a und die distale Anlage-Oberfläche 36a einander zugewandt orientiert sind. Alternativ dazu können die proximale Anlage-Oberfläche 35a und die distale Anlage-Oberfläche 36a am ersten Distanzstück 34 oder dem Verbindungsstück 35 ausgebildet sein. Bei den in den Figuren dargestellten Ausführungsformen des Linear-Verstellers 1 weist das Komplementäranschlagteil 45 eine erste Anlage-Oberfläche 45a und eine zweite Anlage-Oberfläche 45b auf, die entgegen gesetzt zueinander gerichtet sind. Bei dem Stellzustand (i) liegen die zweite Anlage-Oberfläche 45b des Komplementäranschlagteils 45 und die distale Anlage-Oberfläche 36a des distalen Mobilanschlagteils 36 aneinander an. Bei dem Stellzustand (ii) liegen die erste Anlage-Oberfläche 45a des Komplementäranschlagteils 45 und die proximale Anlage-Oberfläche 35a des proximalen Mobilanschlagteils 35 aneinander an.

Bei Ausführungsformen des Linear-Verstellers 1, bei denen die Merkmale (n) nicht ausgebildet sind, kann der Linear-Versteller 1 ohne zweite Anlage-Oberfläche 45b des Komplementäranschlagteils 45 und insbesondere ohne Komplementäranschlagteil 45 realisiert sein. Dabei kann die erste Anlage-Oberfläche 45a des Komplementäranschlagteils 45 als dem ersten Endabschnitt 1a oder dem ersten Ende E1 zugewandte Oberfläche oder Randfläche der zweiten Anschlagvorrichtung 40 realisiert sein.

Nach der Erfindung kann der Linear-Versteller 1 auch mehrere erste Anschlagvorrichtungen, also am ersten Ende E1 des Linear-Verstellers 1 gelegene erste Anschlagvorrichtungen aufweisen. Dabei können die mehreren ersten Anschlagvorrichtungen jeweils nach einer der hierin beschriebenen Realisierungen derselben realisiert sein.

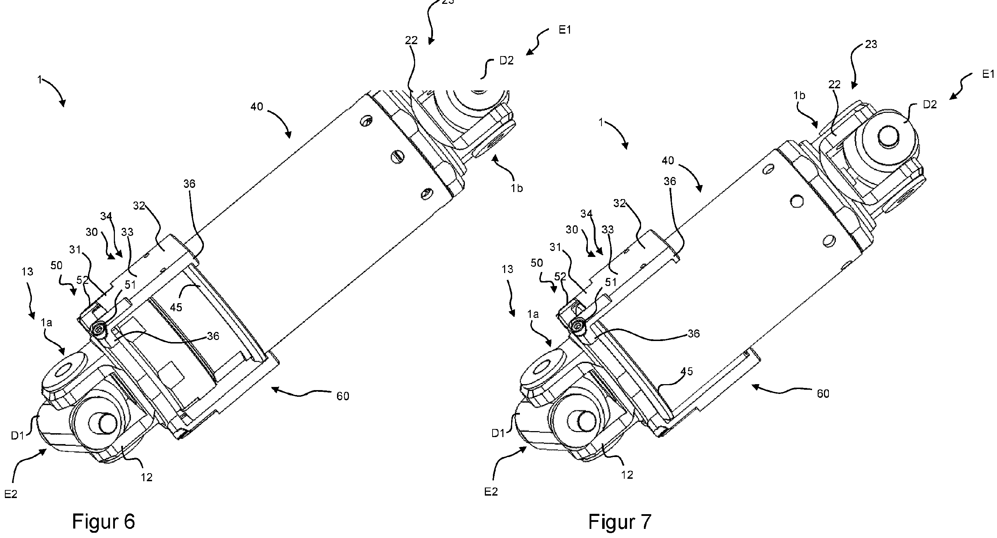

Bei der in den Figuren 6 bis 10 dargestellten Ausführungsform des Linear-Verstellers 1 sind zwei erste Anschlagvorrichtungen angeordnet, die mit den Bezugszeichen "30" und "60" bezeichnet sind. Bei dieser Ausführungsform sind die ersten Anschlagvorrichtungen 30, 60 zueinander identisch ausgeführt und in Bezug auf die Spindel-Längsachse L3 einander gegenüberliegend angeordnet. Alternativ dazu können die ersten Anschlagvorrichtungen 30, 60 jede für sich jeweils nach einer der hierin beschriebenen Varianten realisiert sein.

Nach der Erfindung kann, wie in den Figuren dargestellt, die erste Anschlagvorrichtung 30 mittels einer Feststellvorrichtung 50 in einem Anschlag-Bereitstellungszustand gehalten werden, wobei die Feststellvorrichtung 50 die erste Anschlagvorrichtung 30 in Bezug auf ihre Position und Lage gegen eine Bewegung relativ zum ersten Stellteil 10 fixiert. Bei dem Anschlag-Bereitstellungszustand kann je nach Ausführungsform der Anschlagvorrichtungen 30, 40 bei jeweils entsprechendem Verstellzustand des Spindel-Spindelmutter-Mechanismus (2) der Anschlagzustand (ii) und optional auch der Anschlagzustand (i) eintreten.

Bei den dargestellten Ausführungsformen ist die Feststellvorrichtung 50 am proximalen Endabschnitt 31 ausgebildet. Alternativ dazu könnte die Feststellvorrichtung 50 am distalen Endabschnitt 32 oder am Verbindungsstück 33 ausgebildet sein.

Bei den Ausführungsformen des Linear-Verstellers 1, die in den Figuren 4 und 5 sowie den Figuren 9 und 10 gezeigt ist, ist die erste Anschlagvorrichtung 30 mittels der Feststellvorrichtung 50 in dem Anschlag-Bereitstellungszustand gehalten, wobei die Feststellvorrichtung 50 die erste Anschlagvorrichtung 30 in Bezug auf ihre Position und Lage gegen eine Bewegung relativ zum ersten Stellteil 10 fixiert. Dabei ist die erste Anschlagvorrichtung 30 in dem Anschlag-Bereitstellungszustand mittels eines Verbindungselements 51 an dem ersten Basiskörper 11 und insbesondere dem ersten Basiskörper-Boden 15 befestigt und fixiert und somit verriegelt. Diese Befestigung oder Verriegelung ist mittels zweier Verbindungselemente 51, 52 realisiert, die jeweils durch seitlich in dem proximalen Endabschnitt 31 ausgebildete Durchgangsbohrungen und in Bohrungen ragen, die in dem ersten Basiskörper-Boden 15 ausgebildet sind. Die Längsrichtung der Verbindungselemente 51, 52 kann entlang oder quer zur Spindel-Längsachse L3 verlaufen. Alternativ kann der Linear-Verstellers 1 auch derart realisiert sein, dass dieser nur ein Verbindungselement und nur eine im proximalen Endabschnitt 31 ausgebildete Durchgangsbohrung und Bohrung im ersten Basiskörper-Boden 15 aufweist.

Durch Lösen der Feststellvorrichtung 50 und insbesondere des zumindest einen Verbindungselements 51, 52 wird die erste Anschlagvorrichtung 30 gegenüber dem ersten Basiskörper 11 in den Anschlag-Freigabezustand gebracht, insbesondere wenn die einander zugewandten Anlage-Oberflächen entsprechend rampenförmig und paarweise als Gleitflächen verlaufen. Insbesondere wenn die distale Anlage-Oberfläche 36a und die zweite Anlage-Oberfläche 45b sich entlang zueinander erstrecken und dabei jeweils in einem Winkel von z.B. größer als 1 Grad gegenüber der radialen Richtung verlaufen und radial nach außen in Richtung zum ersten Ende E1 hin gerichtet sind, tritt im Anschlag-Freigabezustand der Stellzustand (i) nicht ein, da bei der Anschlag-Maximalverstellerlänge Lmax die distale Anlage-Oberfläche 36a und die zweite Anlage-Oberfläche 45b aneinander vorbei gleiten. Dabei wird die erste Anschlagvorrichtung 30 radial nach außen bewegt und die Weiterbewegung der zweiten Anschlagvorrichtung 40 nicht mehr verhindert. In gleicher Weise kann, insbesondere wenn sich die proximale Anlage-Oberfläche 35a und die erste Anlage-Oberfläche 45a entlang zueinander erstrecken und dabei jeweils in einem Winkel von z.B. größer als 1 Grad gegenüber der radialen Richtung verlaufen und radial nach außen in Richtung zum zweiten Ende E2 hin gerichtet sind, der Fall auftreten, dass der Anschlag-Freigabezustand der Stellzustand (ii) nicht erfolgt, da bei der Anschlag-Maximalverstellerlänge Lmin die proximale Anlage-Oberfläche 35a und die erste Anlage-Oberfläche 45a aneinander vorbei gleiten. Dabei wird die erste Anschlagvorrichtung 30 radial nach außen bewegt und die Weiterbewegung der zweiten Anschlagvorrichtung 40 nicht mehr verhindert.

Ohne diese spezielle Gestaltung der Oberflächen sind diese Effekte auch dadurch erreichbar, dass die jeweilige im proximalen Endabschnitt 31 ausgebildete Durchgangsbohrung und die jeweilige Bohrung im ersten Basiskörper-Boden 15 als Langlöcher ausgebildet sind.

Weiterhin kann die Feststellvorrichtung 50 als Clip-Verbindung realisiert sein. Alternativ oder zusätzlich zu den beschriebenen Varianten der Feststellvorrichtung 50 kann diese als Klemmvorrichtung realisiert sein, die als Presspassung zwischen dem ersten Basiskörper 11 und der ersten Anschlagvorrichtung 30 und insbesondere dem proximalen Endabschnitt 31 ausgeführt sein kann.

Somit ist durch die Gestaltung der Anschlagvorrichtung 30 und des ersten Basiskörpers 11 erreichbar, dass nach Lösen der mechanischen Fixierung der Feststellvorrichtung (50), der Linear-Versteller (1) in einem Anschlag-Freigabezustand ist.

Bei den dargestellten Ausführungsformen des Linear-Verstellers 1 ist die erste Anschlagvorrichtung 30 in Bezug auf die Spindelachse auch radial nach außen entfernbar, indem beim Lösen der Feststellvorrichtung 50 das zumindest eine Verbindungselement 51, 52 aus seiner Verbindung mit dem ersten Basiskörper 11 und insbesondere der Bohrung in demselben heraus bewegt wird, so dass sich die Feststellvorrichtung 50 dann im Anschlag-Freigabezustand befindet.

Bei jeder Ausführungsform des Linear-Verstellers 1 kann dieser und insbesondere der Spindel-Spindelmutter-Mechanismus 2 derart gestaltet sein, dass der Bewegungsbereich von Spindel 3 und Spindelmutter 5 im Anschlag-Freigabezustand größer als der Bewegungsbereich von Spindel 3 und Spindelmutter 5 im Anschlag-Bereitstellungszustand ist. Aus diesem Grund sind die Stellteile in dem Anschlag-Freigabezustand von einer der Anschlag-Fahrpositionen aus mit dem Spindel-Spindelmutter-Mechanismus relativ zueinander in der Einfahrbewegung und der Ausfahrbewegung bewegbar.

Alternativ dazu oder zusätzlich kann jede der Ausführungsformen des erfindungsgemäßen Linear-Verstellers 1 derart realisiert sein, dass die zweite Anschlagvorrichtung 40 mittels einer Feststellvorrichtung an den zweiten Basiskörper 21 gekoppelt oder an diesem befestigt ist, um diese in einem Anschlag-Bereitstellungszustand zu halten. Dabei fixiert die Feststellvorrichtung im Anschlag-Bereitstellungszustand die zweite Anschlagvorrichtung 40 in Bezug auf ihre Position und Lage gegen eine Bewegung relativ zum zweiten Stellteil 20. Bei dem Anschlag-Bereitstellungszustand kann je nach Ausführungsform der Anschlagvorrichtungen 30, 40 bei jeweils entsprechendem Verstellzustand des Spindel-Spindelmutter-Mechanismus 2 eine oder beide der Anschlagzustände (i), (ii) eintreten. Die Feststellvorrichtung kann analog nach einer der hierin beschriebenen Varianten der Feststellvorrichtung 50, die zwischen dem ersten Basiskörper 11 und der ersten Anschlagvorrichtung 30 wirkt, realisiert sein.

Alternativ dazu kann jede der Ausführungsformen des erfindungsgemäßen Linear-Verstellers 1 derart realisiert sein, dass der Übergang von dem Anschlag-Bereitstellungszustand zu dem Anschlag-Freigabezustand durch zumindest teilweises Bewegen der ersten Anschlagvorrichtung 30 oder der zweiten Anschlagvorrichtung 40 in Bezug auf die Spindelachse radial nach außen erfolgt, indem diese verschwenkt werden. Bei diesen Ausführungsformen kann die Feststellvorrichtung 50 als Scharniergelenk mit dem Verbindungselement 51 als Drehachse ausgeführt sein, so dass nach dem Lösen von Verbindungselement 51 und dessen Gegenstück das Verbindungselement 51 in den Durchgangsbohrungen des ersten Basiskörpers 11 und der Feststellvorrichtung 50 verbleibt und in diesem Zustand die Feststellvorrichtung 50 gegenüber dem ersten Basiskörper 11 in den Anschlag-Freigabezustand verschwenkt werden kann, in dem die erste Anschlagvorrichtung 30 und die zweite Anschlagvorrichtung 40 nicht in gegenseitigen Anschlag gebracht werden können.

Bei Ausführungsformen des Linear-Verstellers 1, die zwei erste Anschlagvorrichtungen 30, 60, also die Anschlagvorrichtung 30 und die zusätzliche Anschlagvorrichtung 60 aufweist, weist die zusätzliche Anschlagvorrichtung 60 Merkmalskombinationen auf, die voranstehend anhand der Anschlagvorrichtung 30 beschrieben worden sind.

Somit kann mit einer der hierin beschriebenen Ausführungsformen des Linear-Verstellers 1 ein Verfahren zur Instandsetzung des Linear-Verstellers durchgeführt werden. Im operationellen Betrieb ist mittels der Feststellvorrichtung 50 die erste Anschlagvorrichtung 30 an dem ersten Basiskörper 11 oder mittels einer Feststellvorrichtung die zweite Anschlagvorrichtung 40 an dem zweiten Basiskörper 21 in einem Anschlag-Bereitstellungszustand fixiert, bei dem der Anschlagzustand bei der Einfahrbewegung oder der Ausfahrbewegung eintritt. Davon ausgehend erfolgt nach dem Verfahren ein Lösen der jeweiligen Feststellvorrichtung und Bewegen der ersten Anschlagvorrichtung 30 gegenüber dem ersten Basiskörper 11 bzw. ein Bewegen der zweiten Anschlagvorrichtung 40 gegenüber dem zweiten Basiskörper 21 mit einer Bewegungskomponente, die der Anschlag-Verstellbewegung entgegengesetzt ist, so dass der Linear-Versteller 1 in dem Anschlag-Freigabezustand ist. Danach erfolgt ein Bewegen der Stellteile 10, 20 von der Anschlag-Fahrposition aus mit dem Spindel-Spindelmutter-Mechanismus 2 relativ zueinander in der Einfahrbewegung oder der Ausfahrbewegung.

### Bezugszeichen

- 1: Linear-Versteller
- 1a: erster Endabschnitt
- 1b: zweiter Endabschnitt
- 2: Spindel-Spindelmutter-Mechanismus
- 3: Spindel
- 4: Spindelgewinde
- 5: Spindelmutter
- 7: Motor
- 10: erstes Stellteil
- 11: erster Basiskörper
- 12: erste Lagerungsvorrichtung
- 13: erste Anschlussvorrichtung
- 15: erster Basiskörper-Boden
- 16: umlaufender Wandungsabschnitt
- 17: Verlängerungsabschnitt
- 20: zweites Stellteil
- 21: zweiter Basiskörper
- 22: zweite Lagerungsvorrichtung
- 23: zweite Anschlussvorrichtung
- 25: zweiter Basiskörper-Boden
- 26: umlaufender Wandungsabschnitt
- 30: erste Anschlagvorrichtung
- 31: proximaler Endabschnitt
- 32: distaler Endabschnitt
- 33: Verbindungsstück
- 34: erstes Distanzstück
- 35: proximales Mobilanschlagteil
- 35a: proximale Anlage-Oberfläche
- 36: distales Mobilanschlagteil
- 36a: distale Anlage-Oberfläche
- 40: zweite Anschlagvorrichtung
- 41: Verbindungsabschnitt
- 42: Anschlagabschnitt
- 43: Verbindungsstück
- 44: zweites Distanzstück
- 45: Komplementäranschlagteil
- 45a: erste Anlage-Oberfläche
- 45b: zweite Anlage-Oberfläche
- 50: Feststellvorrichtung
- 51, 52: Verbindungselemente
- 60: weitere erste Anschlagvorrichtung
- D1: erstes Drehlager
- D2: zweites Drehlager
- E1: erstes Ende des Linear-Verstellers 1
- E2: zweites Ende des Linear-Verstellers 1
- L3: Spindel-Längsachse
- Lmax: maximale Verstellerlänge
- Lmin: minimale Verstellerlänge

## Patentansprüche

1. Linear-Versteller (1) mit einem ersten Ende (E1), einem zweiten Ende (E2), das in Bezug auf eine Spindel-Längsachse (L3) entgegen gesetzt zum ersten Ende (E1) gelegen ist, einem ersten Stellteil (10) und einem zweiten Stellteil (20), der Linear-Versteller (1) aufweisend:
einen Spindel-Spindelmutter-Mechanismus (2) mit einer Spindel (3) und einer Spindelmutter (5), wobei der Spindel-Spindelmutter-Mechanismus (2) das erste Stellteil (10) und das zweite Stellteil (20) aufgrund der Drehung von Spindel (3) und Spindelmutter (5) relativ zueinander in Stellzustände mit unterschiedlichen Stellungen entlang der Spindel-Längsachse (L3) relativ zueinander verstellen,
wobei das erste Stellteil (10) einen ersten Basiskörper (11) an dem ersten Ende (E1) des Linear-Verstellers (1) und eine erste Anschlagvorrichtung (30), die sich von dem ersten Basiskörper (11) aus in Richtung der Spindel-Längsachse (L3) zum zweiten Ende (E2) hin erstreckt, aufweist,
wobei das zweite Stellteil (20) einen zweiten Basiskörper (21) an dem zweiten Ende (E2) des Linear-Verstellers (1) und eine zweite Anschlagvorrichtung (40), die sich von dem zweiten Basiskörper (21) aus in Richtung der Spindel-Längsachse (L3) zum ersten Ende (E1) hin erstreckt, aufweist,
**dadurch gekennzeichnet, dass** die erste Anschlagvorrichtung (30) und die zweite Anschlagvorrichtung (40) in einen Anschlagzustand kommt, bei der sich die erste Anschlagvorrichtung (30) und die zweite Anschlagvorrichtung (40) mit einander zugewandten Oberflächen (35a, 45a, 36a, 45b) aneinander in Anlage befinden, wenn der Linear-Versteller (1) eine Anschlag-Verstellbewegung mit Reduzierung einer Verstellerlänge (LV) bei einer Einfahrbewegung ausführt und sich das erste Stellteil (10) und das zweite Stellteil (20) in einer vorbestimmten jeweiligen Anschlag-Fahrposition relativ zueinander befinden,
wobei mittels einer Feststellvorrichtung (50) die erste Anschlagvorrichtung (30) an dem ersten Basiskörper (11) oder die zweite Anschlagvorrichtung (40) an dem zweiten Basiskörper (21) in einem Anschlag-Bereitstellungszustand mechanisch fixiert ist, bei dem der Anschlagzustand bei der Einfahrbewegung eintritt, und wobei nach Lösen der mechanischen Fixierung der Feststellvorrichtung (50), der Linear-Versteller (1) in einem Anschlag-Freigabezustand ist, in dem die Stellteile (10, 20) von der Anschlag-Fahrposition aus mit dem Spindel-Spindelmutter-Mechanismus relativ zueinander in der Einfahrbewegung oder einer Ausfahrbewegung oder,
alternativ dazu, relativ zueinander in der Einfahrbewegung und der Ausfahrbewegung bewegbar sind.

2. Linear-Versteller (1) nach dem Anspruch 1, wobei bei dem Anschlag-Bereitstellungszustand die erste Anschlagvorrichtung (30) an dem ersten Basiskörper (11) mittels der Feststellvorrichtung (50) in mechanisch fixierter oder befestigter Weise positions- und lagefixiert angeordnet ist und wobei zur Erreichung des Anschlag-Freigabezustands die Feststellvorrichtung (50) gelöst wird und die erste Anschlagvorrichtung (30) für eine Bewegung von dem ersten Basiskörper (11) weg in Bezug auf die Spindelachse radial nach außen in den Anschlag-Freigabezustand mechanisch freigegeben ist.

3. Linear-Versteller (1) nach einem der voranstehenden Ansprüche,
wobei die erste Anschlagvorrichtung (30) ein erstes Distanzstück (34) und zumindest ein Mobilanschlagteil (35, 36) aufweist, wobei das erste Distanzstück (34) vom ersten Basiskörper (11) aus in Richtung der Spindel-Längsachse (L3) zum zweiten Ende (E2) hin weg ragt und das erste Distanzstück (34) einen proximalen Endabschnitt (31), einen distalen Endabschnitt (32) und ein diese verbindendes Verbindungsstück (33) aufweist,
wobei die erste Anschlagvorrichtung (30) an dem proximalen Endabschnitt (31) ein proximales Mobilanschlagteil (35) aufweist, das sich von der ersten Anschlagvorrichtung (30) aus in Bezug auf die Spindel-Längsachse (L3) radial erstreckt,
wobei die zweite Anschlagvorrichtung (40) ein Komplementäranschlagteil (45) aufweist, das sich von der Spindel-Längsachse (L3) weg erstreckt,
wobei die erste Anschlagvorrichtung (30) und die zweite Anschlagvorrichtung (40) in einen Anschlagzustand kommen, bei der sich das proximale Mobilanschlagteil (35) der ersten Anschlagvorrichtung (30) und das Komplementäranschlagteil (45) der zweiten Anschlagvorrichtung (40) mit einander zugewandten Oberflächen (35a, 36a) aneinander in Anlage befinden, wenn sich der Linear-Versteller (1) aufgrund einer Anschlag-Verstellbewegung mit Reduzierung der Verstellerlänge (LV) bei einer Einfahrbewegung in einem Minimalverstellerlängen-Anschlagzustand befindet.

4. Linear-Versteller (1) nach dem Anspruch 3,
wobei an dem distalen Endabschnitt (32) der ersten Anschlagvorrichtung (30) ein distales Mobilanschlagteil (36) ausgebildet ist, das sich von der ersten Anschlagvorrichtung (30) aus in Bezug auf die Spindel-Längsachse (L3) radial erstreckt,
wobei die erste Anschlagvorrichtung (30) und die zweite Anschlagvorrichtung (40) in einen Anschlagzustand kommen, bei der sich das distale Mobilanschlagteil (36) der ersten Anschlagvorrichtung (30) und das Komplementäranschlagteil (45) der zweiten Anschlagvorrichtung (40) mit einander zugewandten Oberflächen (36a, 45b) aneinander in Anlage befinden, wenn sich der Linear-Versteller (1) aufgrund einer Anschlag-Verstellbewegung mit Vergrößerung der Verstellerlänge (LV) bei einer Ausfahrbewegung in einem Maximalverstellerlängen-Anschlagzustand befindet.

5. Linear-Versteller (1) nach dem Anspruch 3 oder 4, wobei die Feststellvorrichtung (50) am proximalen Endabschnitt (31) ausgebildet ist.

6. Linear-Versteller (1) nach dem einem der Ansprüche 3, 4 oder 5, wobei die zweite Anschlagvorrichtung (40) ein zweites Distanzstück (44) und ein Komplementäranschlagteil (45) aufweist, wobei das zweite Distanzstück (44) vom zweiten Basiskörper (21) aus in Richtung der Spindel-Längsachse (L3) zum ersten Ende (E1) hin weg ragt und das zweite Distanzstück (44) einen Verbindungsabschnitt (41), der mit dem zweiten Basiskörper (21) drehfest verbunden ist, einen Anschlagabschnitt (42) und ein diese verbindendes Verbindungsstück (43) aufweist.

7. Positionier-Vorrichtung mit einem Linear-Versteller (1) nach einem der voranstehenden Ansprüche.

8. Positionier-Anordnung, aufweisend zumindest zwei und insbesondere sechs Linear-Versteller (1) nach einem der voranstehenden Ansprüche 1 bis 6, wobei die zumindest zwei Linear-Versteller (1) derart angeordnet sind, dass deren Spindel-Längsachse (L3) zueinander entlang verlaufen, wobei an einer Seite der Positionier-Anordnung die zumindest zwei Linear-Versteller (1) jeweils an eine Anwendungskomponente ankoppelbar sind und an einer zweiten Seite der Positionier-Anordnung, die in Bezug auf die Spindel-Längsachse (L3) entgegen gesetzt zu der ersten Seite der Positionier-Anordnung gelegen ist, die zumindest zwei Linear-Versteller (1) an eine weitere Anwendungskomponente ankoppelbar sind oder mit einer Referenzfläche in Anlage gebracht werden können.

9. Verwendung von zumindest zwei Linear-Verstellern (1) nach einem der voranstehenden Ansprüche 1 bis 6 in einer Positionier-Anordnung, wobei die zumindest zwei Linear-Versteller (1) derart angeordnet werden, dass deren Spindel-Längsachse (L3) zueinander entlang verlaufen, wobei an einer Seite der Positionier-Anordnung die zumindest zwei Linear-Versteller (1) an eine Anwendungskomponente angekoppelt werden und an einer zweiten Seite der Positionier-Anordnung, die in Bezug auf die Spindel-Längsachse (L3) entgegen gesetzt zu der ersten Seite der Positionier-Anordnung gelegen ist, die zumindest zwei Linear-Versteller (1) an eine weitere Anwendungskomponente angekoppelt werden oder mit einer Referenzfläche in Anlage gebracht werden.

10. Verfahren zur Instandsetzung eines Linear-Verstellers nach einem der voranstehenden Ansprüche 1 bis 6, wobei mittels der Feststellvorrichtung (50) die erste Anschlagvorrichtung (30) an dem ersten Basiskörper (11) oder die zweite Anschlagvorrichtung (40) an dem zweiten Basiskörper (21) in einem Anschlag-Bereitstellungszustand fixiert ist, bei dem der Anschlagzustand bei der Einfahrbewegung eintritt, wobei das Verfahren die folgenden Schritte aufweist:
Lösen der Feststellvorrichtung (50) und Bewegen der ersten Anschlagvorrichtung (30) gegenüber dem ersten Basiskörper (11) oder Bewegen der zweiten Anschlagvorrichtung (40) gegenüber dem zweiten Basiskörper (21) mit einer Bewegungskomponente, die der Anschlag-Verstellbewegung entgegengesetzt ist, so dass der Linear-Versteller (1) in einem Anschlag-Freigabezustand ist,
Bewegen der Stellteile (10, 20) von der Anschlag-Fahrposition aus mit dem Spindel-Spindelmutter-Mechanismus (2) relativ zueinander in der Einfahrbewegung oder der Ausfahrbewegung.

## Claims

1. Linear adjuster (1), which comprises a first end (E1), a second end (E2), which with respect to the spindle longitudinal axis (L3) is situated opposite to the second end (E2), a first adjustment part (10), and a second adjustment part (20), the linear adjuster (1) comprising:
a spindle-and-spindle-nut mechanism (2) which comprises a spindle (3) and a spindle nut (5), wherein the spindle-and-spindle-nut mechanism (2), due to the rotation of the spindle (3) and the spindle nut (5), adjusts the first adjustment part (10) and the second adjustment part (20) relative to one another into in adjustment states with different positions relative to a spindle longitudinal axis (L3),
wherein the first adjustment part (10) comprises a first main body (11) at the first end (E1) of the linear adjuster (1) and a first stop device (30), which extends from the first main body (11) in the direction of the spindle longitudinal axis (L3) toward the second end (E2),
wherein the second adjustment part (20) comprises a second main body (21) at the second end (E2) of the linear adjuster (1) and a second stop device (40), which extends from the second main body (21) in the direction of the spindle longitudinal axis (L3) toward the first end (E1),
**characterized in that** the first stop device (30) and the second stop device (40) come into a stop state, in which the first stop device (30) and the second stop device (40) are in contact with one another with mutually facing surfaces (35a, 45a, 36a, 45b), when the linear adjuster (1) executes a stop adjustment movement with a reduction of an adjustment length (LV) during a retraction movement, and the first adjustment part (10) and the second adjustment part (20) are located in a predetermined respective stop travel position relative to one another,
wherein, by means of a fixation device (50), the first stop device (30) is mechanically fixed to the first main body (11) or the second stop device (40) is mechanically fixed to the second main body (21) in a stop provisioning state, in which the stop state occurs during the retraction movement, and wherein, after releasing the mechanical fixation of the fixation device (50), the linear adjuster (1) is in a stop release state, in which the adjustment parts (10, 20) are movable from the stop travel position with the spindle-and-spindle-nut mechanism relative to one another in the retraction movement and the extension movement or, alternatively thereto, reatliv to each other in the retraction movement and the extension movement.

2. Linear adjuster (1) according to claim 1, wherein, in the stop provisioning state, the first stop device (30) is arranged on the first main body (11) in a mechanically fixed or mounted manner by which its position and orientation is fixed in a mechanically fixed or fixed manner by means of the fixation device (50), and wherein, in order to achieve the stop release state, the fixation device (50) is released and the first stop device (30) is mechanically released for a movement away from the first main body (11) in relation to the spindle axis radially outward into the stop release state.

3. Linear adjuster (1) according to one of the preceding claims,
wherein the first stop device (30) comprises a first spacer piece (34) and at least a mobile stop part (35, 36), wherein the first spacer piece (34) protrudes from the first main body (11) in the direction of the spindle longitudinal axis (L3) towards the second end (E2) and the first spacer piece (34) comprises a proximal end section (31), a distal end section (32) and a connection piece (33) which connects the same,
wherein the first stop device (30) comprises a proximal mobile stop part (35) at the proximal end portion (31), which extends radially from the first stop device (30) with respect to the spindle longitudinal axis (L3),
wherein the second stop device (40) comprises a complementary stop part (45) which extends from the spindle longitudinal axis (L3),
wherein the first stop device (30) and the second stop device (40) come into a stop state in which the proximal mobile stop part (35) of the first stop device (30) and the complementary stop part (45) of the second stop device (40) are in contact with each other with mutually facing surfaces (35a, 36a), when the linear adjuster (1) is in a minimum adjuster length stop state due to a stop adjustment movement with reduction of the adjuster length (LV) during a retraction movement.

4. Linear adjuster (1) according to claim 3,
wherein a distal mobile stop part (36) is formed on the distal end portion (32) of the first stop device (30), which extends radially from the first stop device (30) with respect to the spindle longitudinal axis (L3),
wherein the first stop device (30) and the second stop device (40) come into a stop state in which the distal mobile stop part (36) of the first stop device (30) and the complementary stop part (45) of the second stop device (40) are in contact with one another with mutually facing surfaces (36a, 45b), when the linear adjuster (1) is in a maximum adjuster length stop state due to a stop adjustment movement with an increase in the adjuster length (LV) during an extension movement.

5. Linear adjuster (1) according to claim 3 or 4, wherein the fixation device (50) is formed at the proximal end portion (31).

6. Linear adjuster (1) according to one of claims 3, 4 or 5, wherein the second stop device (40) comprises a second spacer (44) and a complementary stop part (45), wherein the second spacer (44) projects from the second base body (21) in the direction of the spindle longitudinal axis (L3) towards the first end (E1) and the second spacer (44) comprises a connecting section (41) which is connected to the second base body (21) in a rotationally fixed manner, a stop section (42) and a connecting piece (43) connecting these.

7. Positioning device with a linear adjuster (1) according to one of the preceding claims.

8. Positioning assembly, which comprises at least two and in particular six linear adjusters (1) according to one of the preceding claims 1 to 6, wherein the at least two linear adjusters (1) are arranged in such a way that their spindle longitudinal axis (L3) runs along one another, wherein, on one side of the positioning assembly, the at least two linear adjusters (1) can each be coupled to an application component and, on a second side of the positioning assembly, which is situated opposite the first side of the positioning assembly with respect to the spindle longitudinal axis (L3), the at least two linear adjusters (1) can be coupled to a further application component or can be brought into contact with a reference surface.

9. Use of at least two linear adjusters (1) according to one of the preceding claims 1 to 6 in a positioning assembly, wherein the at least two linear adjusters (1) are being arranged in such a way that their spindle longitudinal axis (L3) run along one another, wherein, on one side of the positioning assembly, the at least two linear adjusters (1) are being coupled to an application component and, on a second side of the positioning assembly, which is situated opposite the first side of the positioning assembly with respect to the spindle longitudinal axis (L3), the at least two linear adjusters (1) are being coupled to a further application component or are being brought into contact with a reference surface.

10. Method for repairing a linear adjuster according to one of the preceding claims 1 to 6, wherein, by means of the fixation device (50), the first stop device (30) is fixed to the first main body (11) or the second stop device (40) is fixed to the second main body (21) in a stop provisioning state, in which the stop state occurs during the retraction movement, wherein the method comprises the following steps:
releasing the fixation device (50) and moving the first stop device (30) relative to the first main body (11) or moving the second stop device (40) relative to the second main body (21) with a movement component, which is directed opposite to the stop adjustment movement, such that the linear adjuster (1) is in a stop release state,
moving the adjustment parts (10, 20) from the stop travel position by means of the spindle-and-spindle-nut mechanism (2) relative to each other in the retraction movement or the extension movement.

## Revendications

1. Dispositif de réglage linéaire (1) avec une première extrémité (E1), une deuxième extrémité (E2) qui est située à l'opposé de la première extrémité (E1) par rapport à un axe longitudinal de broche (L3), un premier élément de réglage (10) et un deuxième élément de réglage (20), le dispositif de réglage linéaire (1) présentant :
un mécanisme broche-écrou de broche (2) avec une broche (3) et un écrou de broche (5), dans lequel le mécanisme broche-écrou de broche (2) règle le premier élément de réglage (10) et le deuxième élément de réglage (20) l'un par rapport à l'autre dans des états de réglage avec différentes positions le long de l'axe longitudinal de broche (L3) en raison de la rotation de la broche (3) et de l'écrou de broche (5) l'un par rapport à l'autre,
dans lequel le premier élément de réglage (10) présente un premier corps de base (11) au niveau de la première extrémité (E1) du dispositif de réglage linéaire (1) et un premier dispositif de butée (30) qui s'étend à partir du premier corps de base (11) dans la direction de l'axe longitudinal de broche (L3) vers la deuxième extrémité (E2),
dans lequel le deuxième élément de réglage (20) présente un deuxième corps de base (21) au niveau de la deuxième extrémité (E2) du dispositif de réglage linéaire (1) et un deuxième dispositif de butée (40) qui s'étend à partir du deuxième corps de base (21) dans la direction de l'axe longitudinal de broche (L3) vers la première extrémité (E1),
**caractérisé en ce que** le premier dispositif de butée (30) et le deuxième dispositif de butée (40) viennent dans un état de butée, dans lequel le premier dispositif de butée (30) et le deuxième dispositif de butée (40) se trouvent en appui l'un contre l'autre par des surfaces tournées l'une vers l'autre (35a, 45a, 36a, 45b) lorsque le dispositif de réglage linéaire (1) exécute un mouvement de réglage de butée avec réduction d'une longueur de dispositif de réglage (LV) lors d'un mouvement de rétraction, ainsi que le premier élément de réglage (10) et le deuxième élément de réglage (20) se trouvent dans une position de déplacement de butée respective prédéterminée l'un par rapport à l'autre,
dans lequel, au moyen d'un dispositif de fixation (50), le premier dispositif de butée (30) est fixé mécaniquement au niveau du premier corps de base (11) ou le deuxième dispositif de butée (40) est fixé mécaniquement au niveau du deuxième corps de base (21) dans un état de mise à disposition de butée, dans lequel l'état de butée se produit lors du mouvement de rétraction, et dans lequel, après le desserrage de la fixation mécanique du dispositif de blocage (50), le dispositif de réglage linéaire (1) se trouve dans un état de désengagement de butée, dans lequel les éléments de réglage (10, 20) sont configurés de manière à pouvoir être déplacés l'un par rapport à l'autre dans le mouvement de rétraction ou un mouvement de déploiement ou, alternativement, l'un par rapport à l'autre dans le mouvement de rétraction et le mouvement de déploiement à partir de la position de déplacement de butée avec le mécanisme broche-écrou de broche.

2. Dispositif de réglage linéaire (1) selon la revendication 1, dans lequel, dans l'état de mise à disposition de butée, le premier dispositif de butée (30) est disposé au niveau du premier corps de base (11) au moyen du dispositif de blocage (50) de manière à être fixé ou bloqué mécaniquement en position et en emplacement, et dans lequel, pour atteindre l'état de désengagement de butée, le dispositif de blocage (50) est desserré et le premier dispositif de butée (30) est libéré mécaniquement pour un mouvement s'éloignant du premier corps de base (11) radialement vers l'extérieur par rapport à l'axe de broche dans l'état de désengagement de butée.

3. Dispositif de réglage linéaire (1) selon l'une des revendications précédentes,
dans lequel le premier dispositif de butée (30) présente une première pièce d'écartement (34) et au moins un élément de butée mobile (35, 36), dans lequel la première pièce d'écartement (34) fait saillie à partir du premier corps de base (11) dans la direction de l'axe longitudinal de broche (L3) vers la deuxième extrémité (E2) et la première pièce d'écartement (34) présente une section d'extrémité proximale (31), une section d'extrémité distale (32) et une pièce de liaison (33) reliant celles-ci,
dans lequel le premier dispositif de butée (30) présente au niveau de la section d'extrémité proximale (31) un élément de butée mobile proximal (35) qui s'étend radialement à partir du premier dispositif de butée (30) par rapport à l'axe longitudinal de broche (L3),
dans lequel le deuxième dispositif de butée (40) présente un élément de butée complémentaire (45) qui s'étend en s'éloignant de l'axe longitudinal de broche (L3),
dans lequel le premier dispositif de butée (30) et le deuxième dispositif de butée (40) viennent dans un état de butée, dans lequel l'élément de butée mobile proximal (35) du premier dispositif de butée (30) et l'élément de butée complémentaire (45) du deuxième dispositif de butée (40) se trouvent en appui l'un contre l'autre par des surfaces tournées l'une vers l'autre (35a, 36a) lorsque le dispositif de réglage linéaire (1) se trouve dans un état de butée de longueur de réglage minimale en raison d'un mouvement de réglage de butée avec réduction de la longueur de réglage (LV) lors d'un mouvement de rétraction.

4. Dispositif de réglage linéaire (1) selon la revendication 3,
dans lequel au niveau de la section d'extrémité distale (32) du premier dispositif de butée (30) est réalisé un élément de butée mobile distal (36) qui s'étend radialement à partir du premier dispositif de butée (30) par rapport à l'axe longitudinal de broche (L3),
dans lequel le premier dispositif de butée (30) et le deuxième dispositif de butée (40) viennent dans un état de butée, dans lequel l'élément de butée mobile distal (36) du premier dispositif de butée (30) et l'élément de butée complémentaire (45) du deuxième dispositif de butée (40) se trouvent en appui l'un contre l'autre par des surfaces tournées l'une vers l'autre (36a, 45b) lorsque le dispositif de réglage linéaire (1) se trouve dans un état de butée de longueur de réglage maximale en raison d'un mouvement de réglage de butée avec augmentation de la longueur de réglage (LV) lors d'un mouvement de déploiement.

5. Dispositif de réglage linéaire (1) selon la revendication 3 ou 4, dans lequel le dispositif de blocage (50) est réalisé au niveau de la section d'extrémité proximale (31).

6. Dispositif de réglage linéaire (1) selon l'une des revendications 3, 4 ou 5, dans lequel le deuxième dispositif de butée (40) présente une deuxième pièce d'écartement (44) et un élément de butée complémentaire (45), dans lequel la deuxième pièce d'écartement (44) fait saillie à partir du deuxième corps de base (21) dans la direction de l'axe longitudinal de broche (L3) vers la première extrémité (E1) et la deuxième pièce d'écartement (44) présente une section de liaison (41) qui est reliée de manière solidaire en rotation au deuxième corps de base (21), une section de butée (42) et une pièce de liaison (43) reliant celles-ci.

7. Appareil de positionnement comprenant un dispositif de réglage linéaire (1) selon l'une des revendications précédentes.

8. Dispositif de positionnement, présentant au moins deux et en particulier six dispositifs de réglage linéaires (1) selon l'une des revendications précédentes 1 à 6, dans lequel les au moins deux dispositifs de réglage linéaires (1) sont disposés de telle sorte que leurs axes longitudinaux de broche (L3) s'étendent le long l'un de l'autre, dans lequel les au moins deux dispositifs de réglage linéaires (1) sont configurés de manière à pouvoir être couplés respectivement à un composant d'application sur un côté de l'agencement de positionnement et les au moins deux dispositifs de réglage linéaires (1) sont configurés de manière à pouvoir être couplés à un autre composant d'application ou à pouvoir être amenés en appui avec une surface de référence sur un deuxième côté de l'agencement de positionnement qui est situé à l'opposé du premier côté de l'agencement de positionnement par rapport à l'axe longitudinal de broche (L3).

9. Utilisation d'au moins deux dispositifs de réglage linéaires (1) selon l'une des revendications précédentes 1 à 6 dans un dispositif de positionnement, dans lequel les au moins deux dispositifs de réglage linéaires (1) sont disposés de telle sorte que leurs axes longitudinaux de broche (L3) s'étendent le long l'un de l'autre, dans lequel les au moins deux dispositifs de réglage linéaires (1) sont configurés de manière à être couplés à un composant d'application sur un côté de l'agencement de positionnement et les au moins deux dispositifs de réglage linéaires (1) sont configurés de manière à être couplés à un autre composant d'application ou à être amenés en appui avec une surface de référence sur un deuxième côté de l'agencement de positionnement qui est situé à l'opposé du premier côté de l'agencement de positionnement par rapport à l'axe longitudinal de broche (L3).

10. Procédé de maintenance d'un dispositif de réglage linéaire selon l'une des revendications précédentes 1 à 6, dans lequel, au moyen du dispositif de blocage (50), le premier dispositif de butée (30) est fixé au niveau du premier corps de base (11) ou le deuxième dispositif de butée (40) est fixé au niveau du deuxième corps de base (21) dans un état de mise à disposition de butée, dans lequel l'état de butée se produit lors du mouvement de rétraction, dans lequel le procédé présente les étapes suivantes :
desserrage du dispositif de blocage (50) et déplacement du premier dispositif de butée (30) par rapport au premier corps de base (11) ou déplacement du deuxième dispositif de butée (40) par rapport au deuxième corps de base (21) avec une composante de mouvement qui est opposée au mouvement de réglage de butée, de sorte que le dispositif de réglage linéaire (1) se trouve dans un état de désengagement de butée,
déplacement des éléments de réglage (10, 20) l'un par rapport à l'autre dans le mouvement de rétraction ou le mouvement de déploiement à partir de la position de déplacement de butée à l'aide du mécanisme broche-écrou de broche (2).
